# EUROPÄISCHE PATENTSCHRIFT

(11) **EP 3 933 239 B1**
(45) Veröffentlichungstag und Bekanntmachung des Hinweises auf die Patenterteilung: **24.12.2025**
(21) Anmeldenummer: 20183549.3
(22) Anmeldetag: 01.07.2020
(51) Int. Cl.: F16K 27/00, F16K 31/02, F24D 19/10

(54) **STELLANTRIEB**
ACTUATOR
SERVOMOTEUR

(43) Veröffentlichungstag der Anmeldung: 05.01.2022
(73) Patentinhaber: Eazy Systems GmbH, 31162 Bad Salzdetfurth (DE)
(72) Erfinder: SEELMANN, Florian, 31188 Holle (DE); SEELMANN, Christian, 31174 Schellerten (DE)
(74) Vertreter: Holz, Christian

(56) Entgegenhaltungen:
- EP-A1- 2 803 885
- WO-A1-2011/012581
- CA-A1- 2 398 034
- DE-A1- 102020 107 055
- DE-A1- 19 748 973
- DE-B3- 102018 102 735
- US-A1- 2021 283 731

## Beschreibung

Die vorliegende Erfindung betrifft einen Stellantrieb gemäß dem Oberbegriff des Patentanspruchs 1.

Für verschiedene technische Anwendungen kann es erforderlich sein, den Durchfluss eines Fluids durch eine Fluidleitung zu regulieren. Hierfür können sogenannte Stellventile verwendet werden, welche auch als Regelarmaturen bezeichnet werden können. Das Stellventil kann zwischen einer vollkommen geöffneten und einer vollkommen geschlossenen Stellung stufenlos eingestellt werden und so den Durchfluss des Fluids durch sich hindurch verändern. Hierdurch können je nach technischer Anwendung zum Beispiel der Druck, die Temperatur oder die Durchflussmenge beeinflusst werden. Derartige Fluide können Gase sowie Flüssigkeiten sein. Derartige Stellventile können beispielsweise in Gebäuden bei Warmwasserheizungsanlagen sowie in der Gebäudeleittechnik verwendet werden. Mit anderen Worten können derartige Stellventile in der Heizungs-, Klima- und bzw. oder Lüftungstechnik eingesetzt werden. Die Veränderung der Einstellung des Stellventils kann mittels eines Antriebs erfolgen, welcher entsprechend als Stellantrieb bezeichnet und zum Beispiel elektrisch oder pneumatisch betrieben werden kann.

Zur Regulierung der Temperatur einzelner Räume eines Gebäudes können derartige Stellventile bei Fußbodenheizungen als die Ventile des Heizkreisverteilers verwendet werden. Einzelne Stellventile können auch bei einem jeweiligen Heizkörper bzw. Radiator als dessen Ventil eingesetzt werden. Entsprechend dieser Anwendung können derartige Stellventile auch als thermische Stellventile und deren Antriebe entsprechend als thermische Stellantriebe bezeichnet werden. In beiden Fällen sind die Stellventile mit einem Fluidkreislauf in Form des Rücklaufs des Heizungskreislaufs verbunden, um je nach Ventilstellung, welche mittels des thermischen Stellantriebs eingenommen werden kann, eine vorbestimmte Menge des Heizungswassers in den Heizkörper bzw. in die Rohre eines Abschnitts der Fußbodenheizung einströmen zu lassen. Die Stellung des Stellventils kann hierzu mittels des jeweiligen Stellantriebs von einem Thermostat in Abhängigkeit einer erfassten Raumtemperatur vorgegeben werden, sodass eine vom Benutzer vorgegebene Solltemperatur des Raums erreicht und eingehalten werden kann.

Bei der Montage derartiger Stellantriebe an einem Ventil zum Beispiel einer derartigen Heizungsanlage ist zu bedenken, dass das Stellventil und das Rohr als Fluidleitung der Heizungsanlage üblicherweise nicht vom selben Hersteller stammen wie die Stellantriebe. Stellen Stellantriebe eher mechatronische bzw. elektronische Komponenten zum Beispiel mit einem elektrischen Antrieb dar, so sind die Stellventile und Rohrleitungen eher dem Sanitärbereich als rein mechanische Bauteile zuzuordnen. Entsprechend ist eine Kompatibilität des Stellantriebs mit dem Stellventil, jeweils unabhängig vom Hersteller, erforderlich, um ein Zusammenwirken von Stellantrieb und Stellventil gewährleisten zu können.

Daher ist es bekannt, unterschiedliche Adapter als mechanische Schnittstelle vorzusehen, welche zwischen dem jeweils unterschiedlichen Stellventil und einem einheitlichen Stellantrieb angeordnet werden können, um das Stellventil und den Stellantrieb herstellerunabhängig miteinander zu verbinden und bestimmungsgemäß zusammenwirken zu lassen. Auf diese Weise sind lediglich unterschiedliche Adapter für die unterschiedlichen am Markt üblichen Stellventile vorzusehen. Der Stellantrieb hingegen kann einheitlich passend zu dem Adapter ausgebildet werden. Dies kann es vermeiden, für die unterschiedlichen am Markt verfügbaren Stellventile jeweils einen passenden Stellantrieb vorzusehen, was zu einer erheblichen Variantenvielfalt der Stellantriebe mit entsprechenden Kosten führen würde.

So betrifft das DE 201 09 774 U1 eine Anordnung zur Befestigung eines Stellelements an einem Ventil, das in einer der Fortleitung eines Fluids bestimmten Rohrleitung angeordnet und durch das Stellelement verstellbar ist. Die Anordnung besteht aus einem an dem Ventil zu befestigenden Adapter und einem das Stellelement umfassenden Gehäuse, das in Gebrauchslage auf den am Ventil befestigten Adapter aufsetzbar und durch eine Verriegelung mit demselben verriegelbar ist. Die Verriegelung ist als kreisförmig gebogener, aus Kunststoff bestehende Bügel mit Rastnasen ausgebildet, der sich über einen Winkel von mehr als 190° und weniger als 360° erstreckt und der in Montageposition unverlierbar in einer umlaufenden und nach außen offenen, nutförmigen Vertiefung des Gehäuses angeordnet ist. Der Bügel weist in seinem Verlauf ein in Montageposition von außen zugängliches Gelenk auf und ist in zwei unterschiedlichen Lagen anbringbar. In der einen, der Verriegelungsposition entsprechenden Lage ragen die Rastnasen durch Löcher des Gehäuses hindurch bis in den Adapter hinein, während sie in der anderen Lage außerhalb der Abmessungen des Adapters angeordnet sind.

Nachteilig hierbei ist, dass das Gehäuse des Stellelements als Stellantrieb entlang einer gemeinsamen Längsachse von einem Benutzer an dem Ventil angeordnet und in dieser Anordnung der Bügel als Verriegelung senkrecht zur gemeinsamen Längsachse des Ventils und des Stellantriebs von dem Benutzer zur Längsachse hin gedrückt werden muss. Dies kann einen nicht unerheblichen Aufwand der Montage darstellen. Insbesondere kann dies eine Montage mit beiden Händen des Benutzers erfordern.

Hinsichtlich der Funktionsweise derartiger Stellantriebe und Ventile ist dabei zu beachten, dass üblicherweise das Ventil eine vergleichsweise schwache Ventilfeder bzw. Rückstellfeder aufweist, mittels dessen Federkraft ein Stößel des Ventils entlang derselben Längsachse bewegt und hierdurch das Ventil fluidführend geöffnet werden kann. Der Federkraft der Rückstellfeder des Ventils wirkt dabei eine vergleichsweise starke Druckfeder des Stellantriebs entgegen, sodass das Ventil grundsätzlich, d. h. im Normalzustand, von dem Stellantrieb geschlossen wird. Der Stellantrieb weist ferner ein Stellelement auf, welches bei Betätigung eine zusätzliche Kraft auf die Druckfeder des Stellantriebs ausüben und die Bewegung der Rückstellfeder des Ventils unterstützen kann. Somit können bei Betätigung des Stellelements das Stellelement des Stellantriebs und die Rückstellfeder des Ventils gemeinsam die vergleichsweise starke Federkraft der Druckfeder des Stellantriebs überwinden und hierdurch das Ventil öffnen. Das Stellelement des Stellantriebs kann beispielsweise mittels eines elektrischen Heizwiderstands in Kombination mit einem temperaturabhängigen Dehnkörper umgesetzt werden, siehe DE 31 40 472 C2.

Vorteilhaft ist hierbei die vergleichsweise einfache und bzw. oder kompakte Umsetzung der Ausübung der Antriebskraft bzw. der Stellkraft des Stellantriebs. Dies kann die Kosten und bzw. oder den Bauraum des Stellantriebs geringhalten.

Vorteilhaft ist insbesondere daran, dass die Federkraft der Druckfeder des Stellantriebs größer als die Federkraft der Rückstellfeder des Ventilelements ist, dass bei einem unbetätigten bzw. unbestromten Stellelement des Stellantriebs das Ventil in der Normalstellung geschlossen ist. Wird davon ausgegangen, dass in der meisten Zeit der Nutzung zum Beispiel einer Heizungsanlage kein Wärmebedarf besteht, so kann dadurch, dass das Ventil im Normalzustand geschlossen ist ("normally closed", NC) und der Heizwiderstand des Stellelements des Stellantriebs stromlos bleibt, der Energieverbrauch des Stellantriebs geringgehalten werden.

Nachteilig ist jedoch, dass bei der Montage des Stellantriebs am Ventil die vergleichsweise große Federkraft der Druckfeder des Stellantriebs von dem Benutzer überwunden werden muss, um den Stellantrieb wie zuvor beschrieben an dem Ventil anordnen und in dieser Anordnung senkrecht zur gemeinsamen Längsachse des Ventils und des Stellantriebs mittels des Bügels befestigen zu können, wie zuvor beschrieben. Dies kann einen erheblichen Kraftaufwand bei der Montage für den Benutzer bedeuten. Diesen Kraftaufwand aufzubringen kann für den Benutzer insbesondere aufgrund der Verwendung der zweiten Hand zum Eindrücken des Bügels und bzw. oder aufgrund eines üblicherweise engen Bauraums zum Beispiel bei einem Heizkreisverteiler einer Fußbodenheizung besonders aufwendig bzw. unkomfortabel sein.

Nachteilig ist ferner, dass der montierte Stellantrieb solange das Ventil schließt, bis der Stellantrieb betätigt, zum Beispiel elektrisch betrieben, und hierdurch geöffnet wird. Somit kann zum Beispiel eine Fußbodenheizung aufgrund der geschlossenen Ventile des Heizkreisverteilers zum Beispiel zum Trocknen des Estrichs nicht genutzt werden, solange keine elektrische Verkabelung der Stellantriebe stattgefunden hat. Dies kann zu einem zusätzlichen Aufwand der Bauarbeiten und insbesondere zu einer Einschränkungen bzw. zu einer zusätzlichen Anforderung an den Ablauf der Gewerke führen, um zeitliche Verzögerungen des Baus zu vermeiden.

Daher ist gemäß der DE 197 48 973 A1 vorgesehen, bei einem derartigen Stellantrieb die Druckfeder vor der Montage durch einen Benutzer werkseitig im Rahmen der Herstellung um eine Strecke zusammenzudrücken, welche kleiner als der maximale Hub des Arbeitskolbens als Stellelement ist, und die Druckfeder in dieser Position lösbar zu fixieren. Dies kann durch ein innerhalb des Gehäuses angebrachtes, federndes Halteelement erfolgen, welches die Druckfeder in der zusammengedrückten Position hält, wobei das Halteelement entgegen seiner Federkraft in den Weg der Druckfeder verschoben und in dieser Stellung durch die Druckfeder eingeklemmt wird. Durch die erstmalige Betätigung des Heizwiderstands wird die Druckfeder weiter zusammengedrückt und hierdurch das federnde Halteelement gelöst, sodass dieses senkrecht von der Druckfeder weg bewegt wird und hierdurch dauerhaft der Bewegung der Druckfeder entlang der Längsachse nicht mehr hinderlich im Wege stehen kann. Ein derartiger Stellantrieb mit zusammengerückter Druckfeder kann entsprechend einfach vom Benutzer an dem Ventil bzw. an dem Adapter montiert werden, ohne dass die Druckfeder hierbei vom Benutzer mit Kraft zusammengedrückt werden muss. Eine derartige Ausbildung eines Stellantriebs wird auch als "First Open"-Funktion bezeichnet.

Zu demselben Zweck beschreibt die DE 102 15 473 A1 eine Ventil-Betätigungseinrichtung mit einer Montagehilfseinrichtung, welche an einem aus einem Gehäuse herausragenden, oberen Ende eines Kolbens zwischen dem Kolben und einem Gehäuse befestigt ist. Durch ein Herausziehen der Montagehilfseinrichtung senkrecht zur Längsachse durch einen Benutzer kann auch in diesem Fall eine vor der Montage zusammengedrückte Feder freigegeben werden, wobei dies nachteiligerweise nicht selbstständig wie bei der DE 197 48 973 A1 erfolgt sondern der Benutzer hierzu die Montagehilfseinrichtung manuell entfernen muss. Dies kann einen zusätzlichen Aufwand für den Benutzer bei der Montage darstellen. Auch kann dieser Schritt des Entfernens der Montagehilfseinrichtung bei der Montage vergessen werden, was die bestimmungsgemäße Funktion der Ventil-Betätigungseinrichtung verhindern würde.

Nachteilig ist in jedem Fall jedoch, dass das Entlasten der Rückstellfeder des Ventils bzw. das Halten der Druckfeder des Stellelements mittels der "First Open"-Funktion lediglich im ursprünglichen Zustand des Stellantriebs vor der Montage möglich ist, danach jedoch funktionsbedingt nicht mehr. Ein Öffnen des Ventils durch Eindrücken der Druckfeder des Stellantriebs ist somit im montierten Zustand des Stellantriebs ausschließlich durch das Stellelement des Stellantriebs möglich.

Soll im Betrieb bzw. im montierten Zustand des Stellantriebs das Ventil zum Beispiel zum Zweck eines Dichtigkeitstests der Rohre, zur Inspektion und bzw. oder zur Wartung geöffnet werden, so ist dies lediglich durch die Betätigung mittels des Stellantriebs möglich. Dies kann die Test-, Inspektions- und bzw. oder Wartungsmöglichkeiten einschränken.

Aus der DE 10 2018 102 735 B3 ist eine Betätigungsvorrichtung für ein Ventil mit einem auf das Ventil aufspannbaren Gehäuse bekannt, umfassend eine Druckfeder, an welcher ein Antriebselement angeordnet ist, welches einen gegen die Kraft der Druckfeder verschiebbaren Kolben aufweist, und einen mechanischen Kraftwandler. Ein Teil des mechanischen Kraftwandlers ist in der Betätigungsvorrichtung gelagert und erzeugt eine gegen die Kraft der Druckfeder und bzw. oder des Antriebselement wirkende Kraft, wobei der mechanische Kraftwandler ein Betätigungshebel ist, der einen Lastarm und einen Kraftarm aufweist, wobei ferner der Lastarm die Hebelkraft auf ein Ausführungselement, vorzugsweise auf eine Wippe, überträgt, welches diese an einen daran angeordneten Kolben überträgt, der der Federkraft der Druckfeder entgegenwirkt und das Ventil entlastet.

Auf diese Art und Weise kann die Druckfeder, unabhängig von dem Antriebselement bzw. Stellelement, mittels Hebelkraft entlang der Längsachse von dem Ventil weg eingedrückt werden. Dies kann es ermöglichen, das Ventil manuell zum Beispiel zum Zweck eines Dichtigkeitstests der Rohre, zur Inspektion und bzw. oder zur Wartung zu öffnen, ohne dass hierzu eine Betätigung wie zum Beispiel eine Bestromung des Antriebselements bzw. des Stellelements erforderlich ist.

Zu demselben Zweck beschreibt die DE 10 2018 104 148 A1 einen Stellantrieb für ein Ventil mit einem Betätigungsmittel, einem Stellglied, welches das Betätigungsmittel in Abhängigkeit von Regel- oder Stellgrößen zwischen zwei Endstellungen bewegt, und einem manuell betätigbaren Schaltmittel, mit welchem das Betätigungsmittel in wenigstens eine der beiden Endstellungen unabhängig von den Regel- oder Stellgrößen bewegbar ist. Das Schaltmittel ist ein Exzenter, welcher über ein manuelles Betätigungselement betätigbar ist.

Des Weiteren sind zu diesem Zweck auch Stellantriebe bekannt, die eine Verstellmöglichkeit vorsehen, welche eine Drehbewegung um die Längsachse über eine Rampe als schiefe Ebene in eine axiale Bewegung entlang der Längsachse umsetzt, um der Federkraft der Druckfeder des Stellantriebs entgegenzuwirken und das Ventil zu entlasten sowie hierdurch zu betätigen. Nachteiligerweise erfordert jedoch die Drehbewegung für den Benutzer üblicherweise einen gewissen Bauraum um den Stellantrieb herum, welcher zum Beispiel bei einem Heizkreisverteiler einer Fußbodenheizung nicht gegeben sein kann.

Nachteilig ist bei den zuvor beschriebenen Möglichkeiten der manuellen Betätigung des Ventils, das sowohl ein Öffnen als auch ein Schließen des Ventils von dem Benutzer durchgeführt werden muss. Das Schließen des Ventils kann dabei einen zusätzlichen Aufwand für den Benutzer darstellen. Auch kann das Schließen des Ventils nach dem Test, nach der Inspektion bzw. nach der Wartung vom Benutzer vergessen werden und somit den bestimmungsgemäßen Gebrauch des Stellantriebs verhindern.

Die EP 1 720 086 A2 beschreibt eine thermostatische Steuervorrichtung zum Steuern von Ventilen, die mit einem axial beweglichen Schaft versehen sind, wobei die Steuervorrichtung einen Grundkörper, ein elektrisch betätigtes thermostatisches Stellglied und eine Zwischenverbindungseinrichtung zwischen dem thermostatischen Stellglied und dem Schaft des Ventils aufweist. Die Vorrichtung umfasst auch eine Kappenanordnung, die ihrerseits einen zylindrischen Abschnitt, der an dem Grundkörper befestigt ist, und einen Steuerknopf umfasst, der beweglich von dem zylindrischen Abschnitt getragen wird. Der Steuerknopf ist operativ mit dem Schaft des Ventils verbunden. Der zylindrische Abschnitt und der Steuerknopf weisen Nockenmittel auf, die so ausgebildet sind, dass sie eine axiale Bewegung des Steuerknopfes durch seine manuelle Drehung bewirken. Die Vorrichtung umfasst auch lösbare Haltemittel zum Halten des Steuerknopfes in einer offenen Position des Ventils und Torsionsfedermittel zum automatischen Zurückstellen des Steuerknopfes in eine geschlossene Position des Ventils nach Lösen der Haltemittel von demselben Steuerknopf.

Hierdurch kann die Möglichkeit einer manuellen Betätigung des Ventils zum Öffnen geschaffen werden. Gleichzeitig kann das Schließen des Ventils selbstständig erfolgen, wodurch der entsprechende Aufwand für den Benutzer gespart und bzw. oder ein Vergessen des Schließens durch den Benutzer verhindert werden kann. Mit anderen Worten kann eine automatische Entriegelung des Ventils bzw. dessen Stellantriebs erfolgen.

Nachteilig ist hierbei jedoch, dass die thermostatische Steuervorrichtung der EP 1 720 086 A2 eine hohe technische Komplexität aufweist. Dies kann zu entsprechend hohen Kosten der Herstellung und bzw. oder Montage der Elemente der thermostatischen Steuervorrichtung führen.

Eine Aufgabe der vorliegenden Erfindung ist es, einen Stellantrieb der eingangs beschriebenen Art bereit zu stellen, so dass sowohl eine einfache Montage des Stellantriebs am Ventil als auch ein einfaches Öffnen des Ventils bei montiertem Stellantrieb für den Benutzer ermöglicht werden können. Vorzugsweise soll der Stellantrieb ferner eine First-Open-Funktion aufweisen. Dies soll möglichst kostengünstig, benutzerfreundlich, bauraumsparend, energiesparend und bzw. oder robust und langlebig umgesetzt werden können. Zumindest soll eine Alternative zu bekannten derartigen Stellantrieben geschaffen werden.

Die Aufgabe wird erfindungsgemäß durch einen Stellantrieb mit den Merkmalen des Patentanspruchs 1 gelöst. Vorteilhafte Weiterbildungen sind in den Unteransprüchen beschrieben.

Somit betrifft die vorliegende Erfindung einen Stellantrieb, welcher ausgebildet ist, vorzugsweise mittels eines Adapters, mit einem Ventil verbunden zu werden, mit einem Stellelement, welches ausgebildet ist, das Ventil zu betätigen. Mit anderen Worten liegt der vorliegenden Erfindung ein Stellantrieb zugrunde, wie er eingangs beschrieben wurde. Ein derartiger Stellantrieb kann entweder direkt an einem Ventil angeordnet oder mittels eines Adapters verwendet werden, wie eingangs beschrieben. In jedem Fall kann das Ventil mittels des Stellelements des Stellantriebs wie eingangs beschrieben stufenlos zwischen einer vollständig geöffneten und einer vollständig geschlossenen Stellung betätigt werden.

Der erfindungsgemäße Stellantrieb ist dadurch gekennzeichnet, dass der Stellantrieb ein Funktionsteil mit dem Stellelement und ein Befestigungsteil, welches zum Verbinden mit dem Ventil ausgebildet ist, aufweist, wobei das Funktionsteil und das Befestigungsteil mittels eines Schwenkelements schwenkbar miteinander verbunden sind. Mit anderen Worten ist der erfindungsgemäße Stellantrieb im Wesentlichen durch zwei Bestandteile bzw. durch zwei Komponenten in Form des Funktionsteils und des Befestigungsteils ausgebildet, welche relativ zueinander mittels einer Schwenkbewegung beweglich sind. Das Funktionsteil und das Befestigungsteil sind durch das Schwenkelement relativ zueinander schwenkbar, kippbar bzw. drehbar verbunden. Die Schwenkbewegung erfolgt als Drehbewegung um die Schwenkachse des Schwenkelements. Das Stellelement kann das Ventil direkt oder indirekt betätigen.

Der vorliegenden Erfindung liegt dabei die Erkenntnis zugrunde, dass auf diese Art und Weise das Funktionsteil mit dem Stellelement gegenüber dem Befestigungsteil geschwenkt und in dieser Stellung, welche auch als Montagestellung bezeichnet werden kann, vom Benutzer an dem Ventil bzw. an dessen Adapter angeordnet werden kann. Da das Stellelement in dieser Montagestellung gegenüber dem Befestigungsteil weggeschwenkt ist, kann das Verbinden des Befestigungsteils des Stellantriebs mit dem Ventil bzw. mit dem Adapter von dem Stellelement unbeeinflusst erfolgen. Dies kann die Montage des Stellantriebs als Ganzes an dem Ventil bzw. an dem Adapter für den Benutzer vereinfachen, da einer Kraft eines direkt auf das Ventil wirkenden Stellelements vom Benutzer beim Verbinden des Befestigungsteils mit dem Ventil bzw. mit dem Adapter nicht entgegengewirkt werden muss.

Dies gilt ebenso, falls das Stellelement ausgebildet ist, nicht direkt auf das Ventil zu wirken sondern indirekt durch ein Entgegenwirken auf eine Druckfeder des Funktionsteils des Stellantriebs. Bei der Verwendung eines derartigen Funktionsprinzips des Stellantriebs, wie eingangs beschrieben, drückt nämlich die Druckfeder des Funktionsteils des Stellantriebs in einer Betriebsstellung auf das Ventil, so dass zum Verbinden des Stellantriebs mit dem Ventil bzw. mit dem Adapter aus der Montagestellung in die Betriebsstellung die Federkraft der Druckfeder des Funktionsteils des Stellantriebs vom Benutzer überwunden werden muss. Wird jedoch erfindungsgemäß in der Montagestellung das Funktionsteil des Stellantriebs von dem Befestigungsteil des Stellantriebs weggeschwenkt, so kann die Druckfeder des Funktionsteils des Stellantriebs nicht auf das Ventil bzw. auf den Adapter wirken. Entsprechend kann in der Montagestellung zunächst das Befestigungsteil des Stellantriebs vom Benutzer vergleichsweise einfach am Ventil bzw. am Adapter angeordnet werden, ohne dabei der Federkraft der Druckfeder des Funktionsteils des Stellantriebs entgegenwirken zu müssen. Anschließend kann das Funktionsteil des Stellantriebs durch Schwenken aus der Montagestellung in die Betriebsstellung gebracht werden. Hierdurch kann eine First-Open-Funktion umgesetzt werden.

Ist somit das Befestigungsteil des Stellantriebs vom Benutzer wie zuvor beschrieben in der Montagestellung des Stellantriebs mit dem Ventil bzw. mit dem Adapter verbunden worden, so kann nun vom Benutzer das Funktionsteil des Stellantriebs zum Befestigungsteil des Stellantriebs hin in die Betriebsstellung geschwenkt und mit dem Befestigungsteil verbunden werden, wie weiter unten noch näher beschrieben werden wird. Hierdurch kann die Betriebsstellung des Funktionsteils des Stellantriebs eingenommen werden, in welcher der Stellantrieb bestimmungsgemäß betrieben werden und auf das Ventil wirken kann. Ein erforderliches Eindrücken der Druckfeder des Funktionsteils des Stellantriebs kann dabei durch die Schwenkbewegung vom Benutzer mit einer gewissen Kraft erfolgen. Am Ende der Schwenkbewegung kann das Funktionsteil an dem Befestigungsteil zum Beispiel durch Verrasten in der Betriebsstellung gehalten werden, wie weiter unten noch näher beschrieben werden wird.

Erfindungsgemäß kann auf diese Art und Weise die Montage des Stellantriebs an dem Ventil bzw. an dem Adapter für den Benutzer vereinfacht, beschleunigt und bzw. oder komfortabler gestaltet werden. Insbesondere kann die Montage des Stellantriebs vom Benutzer einhändig erfolgen, da das Funktionsteil und das Befestigungsteil mittels des Schwenkelements miteinander verbunden sind und hierdurch als ein Teil vom Benutzer mit einer Hand gehandhabt werden können. Insbesondere können die Bewegungen zum Verbinden des Befestigungsteils des Stellantriebs mit dem Ventil bzw. mit dem Adapter in der Montagestellung sowie das Schwenken des Funktionsteils des Stellantriebs in die Betriebsstellung nacheinander und unabhängig voneinander erfolgen.

Erfindungsgemäß ist es ferner möglich, in der Betriebsstellung das Funktionsteil des Stellantriebs wieder von dem Befestigungsteil des Stellantriebs zu lösen und von diesem weg zu schwenken, ohne dabei das Befestigungsteil des Stellantriebs von dem Ventil bzw. von dem Adapter lösen zu müssen. Hierdurch kann zum Beispiel für einen Funktionstest, zwecks Wartung und bzw. oder zwecks Inspektion die Funktion des Stellelements des Funktionsteils des Stellantriebs aufgehoben werden, ohne hierzu den Stellantrieb als Ganzes von dem Ventil bzw. von dem Adapter entfernen zu müssen. Nach Abschluss des Funktionstest, der Wartung und bzw. oder der Inspektion kann dann das Funktionsteil des Stellantriebs wie zuvor beschrieben wieder aus der Montagestellung in die Betriebsstellung gebracht werden.

Entsprechend kann erfindungsgemäß die Montage eines Stellantriebs an einem Ventil bzw. an einem Adapter eines Ventils zum Beispiel eines Heizkörpers oder eines Heizkreisverteilers einer Warmwasserheizungsanlage für den Benutzer vereinfacht werden. Gleichzeitig können von dem Stellantrieb eine First-Open-Funktion sowie die Möglichkeit geschaffen werden, dass Ventil beim späteren Gebrauch des Stellantriebs manuell zu öffnen, ohne dass der Stellantrieb hierbei stören kann.

Gemäß einem Aspekt der Erfindung sind das Funktionsteil und das Befestigungsteil ausgebildet, in einer Montagestellung um einen Schwenkwinkel voneinander weg geschwenkt und in einer Betriebsstellung miteinander fluchtend angeordnet zu sein, wobei der Schwenkwinkel derart groß ist, so dass das Stellelement das Ventil nicht betätigen kann. Die Betriebsstellung kann auch als Gebrauchslage bezeichnet werden. Unter einer fluchtenden Anordnung ist zu verstehen, dass das Stellelement des Funktionsteils des Stellantriebs geradlinig in Richtung des Ventils ausgerichtet ist und wirken kann. Dabei sind das Befestigungsteil des Stellantriebs und das Funktionsteil des Stellantriebs entlang dieser geradlinigen Wirkrichtung hintereinander angeordnet.

In der Betriebsstellung kann die bestimmungsgemäße Verwendung des Stellantriebs zum Öffnen und Schließen des Ventils als Stellventil erfolgen, wie bereits zuvor beschrieben. In der Montagestellung kann ein Verbinden des Befestigungsteils des Stellantriebs mit dem Ventil bzw. mit dem Adapter erfolgen, ohne dass das Stellelement des Funktionsteils dabei direkt oder indirekt auf das Ventil wirken kann, wie bereits zuvor beschrieben. Dies kann insbesondere dadurch erreicht werden, dass der Schwenkwinkel zwischen dem Funktionsteil des Stellantriebs und dem Befestigungsteil des Stellantriebs vom Benutzer zum Beispiel mit der Hand entsprechend ausreichend groß gewählt wird. Dies kann vom Benutzer einhändig erfolgen. Hierdurch können zuvor beschriebene Merkmale konkretisiert werden.

Gemäß einem weiteren Aspekt der Erfindung weist das Funktionsteil eine Längsachse auf und das Befestigungsteil weist eine Längsachse auf, wobei in der Montagestellung die Längsachse des Funktionsteils und die Längsachse des Befestigungsteils um den Schwenkwinkel gedreht zueinander verlaufen und wobei in der Betriebsstellung die Längsachse des Funktionsteils und die Längsachse des Befestigungsteils parallel oder deckungsgleich verlaufen. Auf diese Art und Weise können zuvor bereits beschriebenen Merkmale geometrisch konkreter beschrieben und umgesetzt werden.

Gemäß einem weiteren Aspekt der Erfindung ist das Stellelement ausgebildet, das Ventil entlang dessen Längsachse zu betätigen, wobei in der Montagestellung die Längsachse des Funktionsteils um den Schwenkwinkel geschwenkt zur Längsachse des Ventils verläuft und wobei in der Betriebsstellung die Längsachse des Funktionsteils parallel zur oder deckungsgleich mit der Längsachse des Ventils verläuft. Auf diese Art und Weise können zuvor bereits beschriebenen Merkmale geometrisch konkreter beschrieben und umgesetzt werden.

Gemäß einem weiteren Aspekt der Erfindung sind das Funktionsteil und das Befestigungsteil ausgebildet, einander in der Betriebsstellung lösbar zu halten. Mit anderen Worten können das Funktionsteil des Stellantriebs und das Befestigungsteil des Stellantriebs in der Betriebsstellung, in welcher das Stellelement des Funktionsteils des Stellantriebs direkt oder indirekt auf das Ventil wirken kann, miteinander verbunden sein und einander halten, sodass die Betriebsstellung selbstständig dauerhaft beibehalten werden kann. Diese Betriebsstellung kann jedoch vom Benutzer durch Betätigung, wie weiter unten näher beschrieben werden wird, aufgelöst und das Funktionsteil des Stellantriebs wieder in die zuvor beschriebene Montagestellung gegenüber dem Befestigungsteil des Stellantriebs geschwenkt werden. Dies kann im gehaltenen Zustand des Stellantriebs an dem Ventil bzw. an dem Adapter mittels des Befestigungsteils des Stellantriebs eine manuelle Betätigung des Ventils ermöglichen, was zum Beispiel zu Zwecken eines Funktionstest, einer Inspektion und bzw. oder einer Wartung erforderlich sein kann, wie zuvor bereits beschrieben.

Gemäß einem weiteren Aspekt der Erfindung weist das Funktionsteil ein Verriegelungselement auf, welches ausgebildet ist, in der Montagestellung von dem Befestigungsteil gelöst zu sein und in der Betriebsstellung mit dem Befestigungsteil lösbar verbunden zu sein. Mittels eines derartigen Verriegelungselements kann ein formschlüssiger und bzw. oder kraftschlüssiger Halt des Funktionsteils des Stellantriebs an dem Befestigungsteil des Stellantriebs umgesetzt werden. Dies kann mit mechanischen Mitteln einfach, kompakt, kostengünstig und bzw. oder robust und langlebig erfolgen. Auch kann das Lösen einer derartigen mechanischen Verbindung durch geeignete mechanische Mittel vom Benutzer vergleichsweise einfach, schnell und bzw. oder intuitiv erfolgen. Dies kann die Umsetzung einer derartigen lösbaren Verbindung zwischen dem Funktionsteil des Stellantriebs und dem Befestigungsteil des Stellantriebs begünstigen.

Gemäß einem weiteren Aspekt der Erfindung weist das Verriegelungselement einen Verriegelungshebel auf, welcher schwenkbar an dem Funktionsteil angeordnet ist, wobei der Verriegelungshebel ausgebildet ist, von der Federkraft einer Verriegelungsfeder in eine Haltestellung gedrückt zu werden und das Befestigungsteil lösbar zu halten, wobei der Verriegelungshebel ferner ausgebildet ist, entgegen der Federkraft der Verriegelungsfeder von einem Benutzer in eine Lösestellung gedrückt zu werden und das Befestigungsteil freizugeben. Auf diese Art und Weise kann die zuvor beschriebene Verriegelungsfunktion mittels eines hebelartigen Elements umgesetzt werden, welches zwischen einer Haltestellung und einer Lösestellung um eine Schwenkachse geschwenkt werden kann. Dabei kann die Schwenkbewegung aus der Haltestellung in die Lösestellung durch eine Betätigung des Benutzers erfolgen, um bei Bedarf die Verbindung zwischen dem Funktionsteil des Stellantriebs und dem Befestigungsteil des Stellantriebs zu lösen und das Funktionsteil des Stellantriebs gegenüber dem Befestigungsteil des Stellantriebs aus der Betriebsstellung wieder in die Montagestellung schwenken zu können, wie zuvor beschrieben. Mittels der Verriegelungsfeder kann der Verriegelungshebel dabei selbsttätig wieder zurück aus der Lösestellung in die Haltestellung gebracht werden, sodass der Benutzer von dieser Tätigkeit entlastet und dies nicht vergessen werden kann. Hierdurch kann eine einfache, funktionelle und bzw. oder komfortable Betätigungsmöglichkeiten für den Benutzer geschaffen werden, die Verbindung zwischen dem Funktionsteil des Stellantriebs und dem Befestigungsteil des Stellantriebs bei Bedarf wieder aufzuheben.

Gemäß einem weiteren Aspekt der Erfindung weisen das Verriegelungselement, vorzugsweise der Verriegelungshebel, wenigstens ein Rastelement, vorzugsweise wenigstens einen Rasthaken, und das Befestigungsteil wenigstens ein Rastelement, vorzugsweise wenigstens einen Rasthaken, auf, welche ausgebildet sind, einander in der Haltestellung formschlüssig zu halten und einander in der Lösestellung freizugeben. Hierdurch kann auf einfache Art und Weise ein formschlüssiger Halt zwischen dem Funktionsteil des Stellantriebs und dem Befestigungsteil des Stellantriebs in der Haltestellung des Verriegelungselements geschaffen werden, welcher vorzugsweise wie zuvor beschrieben mittels des Verriegelungshebels wieder aufgelöst werden kann.

Vorzugsweise sind dabei die beiden Rastelemente des Verriegelungselements und des Befestigungsteils des Stellantriebs derart zueinander hin ausgebildet, sodass das feststehende Rastelement des Befestigungsteils des Stellantriebs das Rastelement des Verriegelungselements, insbesondere des schwenkbaren Verriegelungshebels, federnd weg drückt, wenn das Funktionsteil des Stellantriebs aus der Montagestellung zu dem Befestigungsteil des Stellantriebs hin in die Betriebsstellung geschwenkt wird. Hierdurch kann das Rastelement des Verriegelungselements dem feststehenden Rastelement des Befestigungsteils des Stellantriebs in der Schwenkbewegung ausweichen und dieses anschließend einrastend hintergreifen. Dies kann durch die Elastizität des Materials des Verriegelungselements erfolgen. Im Falle der Verwendung des zuvor beschriebenen federnd gelagerten Verriegelungshebels kann dies durch die Federwirkung der Verriegelungsfeder des Verriegelungshebels erfolgen. In jedem Fall kann auf diese Art und Weise das selbstständige Einnehmen der Verrastung der beiden Rastelemente des Verriegelungselements des Funktionsteils des Stellantriebs und des Befestigungsteils des Stellantriebs miteinander erfolgen, ohne dass der Benutzer hierzu tätig werden muss.

Gemäß einem weiteren Aspekt der Erfindung weist der Verriegelungshebel wenigstens ein Begrenzungselement auf, welches ausgebildet ist, die Schwenkbewegung des Verriegelungshebels aus der Haltestellung in die Lösestellung zu begrenzen. Auf diese Art und Weise kann die Schwenkbewegung des Verriegelungshebels aus der Haltestellung in die Lösestellung einfach begrenzt werden, sodass die Verbindung zwischen dem Funktionsteil des Stellantriebs und dem Befestigungsteil des Stellantriebs wie zum Beispiel deren Verrastung sicher aufgehoben werden kann, ohne gleichzeitig die hierfür erforderliche Schwenkbewegung des Verriegelungshebels aus der Haltestellung in die Lösestellung größer als erforderlich werden zu lassen. Dies kann den Bauraum des Verriegelungshebels geringhalten.

Gemäß einem weiteren Aspekt der Erfindung weist das Funktionsteil ein Gehäuse auf, welches wenigstens den Verriegelungshebel zumindest abschnittsweise umschließt, wobei das Gehäuse eine Gehäuseaussparung aufweist, durch welche hindurch der Verriegelungshebel für einen Benutzer betätigbar ist, wobei vorzugsweise der Verriegelungshebel ein Bedienelement aufweist, welches zumindest abschnittsweise durch die Gehäuseaussparung hindurch nach außerhalb des Gehäuses ragt. Hierdurch kann der Verriegelungshebel sowie dessen Elemente wie zum Beispiel dessen Verriegelungsfeder, dessen Schwenkachse und bzw. oder die zuvor beschriebenen Rastelemente durch das Gehäuse gegenüber der Umgebung abgegrenzt und geschützt werden. Dies kann eine Beschädigung, eine Blockade und bzw. oder eine Verschmutzung dieser Elemente verhindern. Auch kann dies den optischen Eindruck für den Benutzer verbessern. Dabei kann jedoch gleichzeitig der Verriegelungshebel mittels des Bedienelements für den Benutzer durch die Gehäuseaussparung hindurch erreichbar gemacht werden, sodass die Verbindung zwischen dem Funktionsteil des Stellantriebs und dem Befestigungsteil des Stellantriebs wie zum Beispiel deren Verrastung vom Benutzer bei Bedarf aufgehoben werden kann.

Gemäß einem weiteren Aspekt der Erfindung ist das Stellelement ausgebildet, das Ventil entlang dessen Längsachse zu betätigen, wobei das Befestigungsteil ausgebildet ist, zumindest im Wesentlichen senkrecht zur Längsachse des Ventils, vorzugsweise und senkrecht zur Schwenkachse des Schwenkelements, mittels einer Bewegung in einer translatorischen Richtung mit dem Ventil oder mit einem Adapter des Ventils verbunden zu werden. Mit anderen Worten ist das Befestigungsteil des Stellantriebs ausgebildet, mit dem Ventil oder mit dem Adapter des Ventils verbunden zu werden, indem der Benutzer hierzu eine geradlinige Montagebewegung ausführt, welche zumindest im Wesentlichen senkrecht zur Längsachse des Ventils verläuft. Somit kann das Befestigungsteil des Stellantriebs vom Benutzer seitlich auf das Ventil bzw. auf den Adapter aufgeschoben und hierdurch mit dem Ventil bzw. mit dem Adapter verbunden werden. Dies kann das Verbinden des Befestigungsteils des Stellantriebs mit dem Ventil bzw. mit dem Adapter mittels einer einfach vom Benutzer auszuführenden Bewegung ermöglichen. Dies kann die Montage für den Benutzer entsprechend vereinfachen und bzw. oder beschleunigen.

Gemäß einem weiteren Aspekt der Erfindung weist das Befestigungsteil eine in der translatorischen Richtung wenigstens einseitig, vorzugsweise genau einseitig, offene Aufnahme auf, welche ausgebildet ist, wenigstens einen Vorsprung des Ventils oder des Adapters aufzunehmen, wobei das Befestigungsteil senkrecht zur translatorischen Richtung und senkrecht zur Längsachse des Ventils dem Ventil zugewandt wenigstens einen Vorsprung aufweist, welcher ausgebildet ist, wenigstens einen entsprechenden Rücksprung des Ventils oder des Adapters zu hintergreifen. Mit anderen Worten weist das Ventil oder der Adapter senkrecht zu seiner Längsachse wenigstens einen Vorsprung auf, welcher von einem korrespondierenden Vorsprung der Aufnahme des Befestigungsteils des Stellantriebs hintergriffen werden kann, sodass entlang der Längsachse des Ventils ein formschlüssiger Halt erfolgen kann.

Hierzu kann die Aufnahme des Befestigungsteils des Stellantriebs entlang der translatorischen Richtung der Montage beidseitig offen sein, sodass der Benutzer zu beiden Seiten der translatorischen Richtung die Montage des Befestigungsteils des Stellantriebs an dem Ventil bzw. an dem Adapter vornehmen kann. Vorzugsweise ist die Aufnahme des Befestigungsteils des Stellantriebs jedoch lediglich genau einseitig offen ausgebildet, sodass die geschlossene Seite der Aufnahme des Befestigungsteils des Stellantriebs die Montagebewegung in der translatorischen Richtung einseitig als Anschlag begrenzen kann. Insbesondere können die einander hintergreifenden Vorsprünge des Ventils bzw. des Adapters und der Aufnahme des Befestigungsteils des Stellantriebs auch auf der geschlossenen Seite der Aufnahme des Befestigungsteils des Stellantriebs ausgebildet sein, sodass ein entsprechend großflächiger Halt des Befestigungsteils des Stellantriebs an dem Ventil bzw. an dem Adapter erfolgen kann.

Bei einem zylindrisch ausgebildeten Ventil bzw. Adapter kann die Aufnahme des Befestigungsteils des Stellantriebs entsprechend halbrund um 180° ausgebildet sein sowie sich vorzugsweise zu ihrem offenen Ende entlang der translatorischen Richtung geradlinig parallel verlaufend fortsetzen, was das Zusammenführen des offenen Endes der Aufnahme des Befestigungsteils des Stellantriebs und des Ventils bzw. des Adapters mittels der einander hintergreifenden Vorsprünge vereinfachen kann. Dies kann die Montage für den Benutzer vereinfachen und dem Benutzer insbesondere bei der Ausführung der Bewegung entlang der translatorischen Richtung unterstützen.

Gemäß einem weiteren Aspekt der Erfindung ist die Aufnahme sich im Verlauf der translatorischen Richtung entlang der Längsachse des Ventils verjüngend ausgebildet, so dass gegenüber dem Vorsprung des Ventils oder des Adapters ein kraftschlüssiger Halt bewirkt werden kann. Hierdurch kann eine klemmende Wirkung entlang der Längsachse des Ventils zwischen den einander hintergreifenden Vorsprüngen des Ventils bzw. des Adapters und der Aufnahme des Befestigungsteils des Stellantriebs erreicht werden. Dies kann den Halt der Verbindung des Befestigungsteils des Stellantriebs mit dem Ventil bzw. mit dem Adapter verbessern bzw. sicherstellen. Dies kann dabei auf mechanisch vergleichsweise einfache Art und Weise und dennoch wirkungsvoll erreicht werden.

Gemäß einem weiteren Aspekt der Erfindung weist das Funktionsteil ein Betätigungselement, vorzugsweise einen Kolben, zum Betätigen einer Ventilfeder des Ventils, vorzugsweise entlang dessen Längsachse, auf. Das Betätigen der Ventilfeder des Ventils kann mittels eines Stößels des Ventils erfolgen, gegen den das Betätigungselement des Funktionsteils des Stellantriebs wirken bzw. drücken kann. Von dem Stößel des Ventils kann dann eine Durchlassöffnung des Ventils freigegeben werden, um ein Fluid durch die Durchlassöffnung hindurch strömen zu lassen.

Gemäß einem weiteren Aspekt der Erfindung weist das Funktionsteil eine Druckfeder auf, welche ausgebildet ist, mittels eines Betätigungselements, vorzugsweise mittels eines Kolbens, einer Ventilfeder des Ventils entgegenzuwirken, wobei die Federkraft der Druckfeder größer als die Federkraft der Ventilfeder des Ventils ist, wobei das Stellelement ausgebildet ist, bei Betätigung, insbesondere bei Bestromung, der Druckfeder entgegenzuwirken und die Federkraft der Druckfeder gemeinsam mit der Federkraft der Ventilfeder des Ventils zu überwinden. Hierdurch kann eine Funktionsweise des Stellantriebs wie eingangs beschrieben umgesetzt werden.

Mit anderen Worten liegt der vorliegenden Erfindung die Erkenntnis zugrunde, dass üblicherweise bei bekannten Befestigungsarten für thermische Stellantriebe auf einem Ventil, ob zum Beispiel mit Überwurfmutter oder mit Adapter, beim Aufsetzen des Stellantriebs auf das Ventil, bei vorhandener First-Open-Funktion oder bei manueller Öffnungsmöglichkeit, der Stellantrieb mittels eines Hebel oder mittels eines Drehknopfes komplett oder teilweise vom Benutzer gegen die Ventilkraft gedrückt werden muss. Ferner ist üblicherweise bei Stellantrieben mit manueller Öffnung des Ventils der Öffnungsweg des Ventils durch den manuellen Hub des Stellantriebes begrenzt.

Erfindungsgemäß kann daher durch Aufteilen des Stellantriebes in ein Befestigungsteil und in ein Funktionsteil, die mittels eines Schwenkelements bzw. mittels eines Kippgelenks miteinander verbunden sind, der Stellantrieb bei geöffneter Verriegelung in der Montagestellung fast kraftlos in radialer bzw. seitlicher Richtung vom Benutzer auf den Adapter geschoben werden. Durch Drücken gegen das Funktionsteil als oberer Teil des Stellantriebes kann das Ventil geschlossen und gleichzeitig der Stellantrieb auf dem Adapter in der Betriebsstellung verriegelt werden. Durch Betätigen eines Verriegelungshebels aus der Haltestellung in die Lösestellung kann das Ventil jeder Zeit vom Benutzer manuell geöffnet werden, ohne den Stellantrieb vom Ventil entfernen zu müssen. Durch den Öffnungswinkel zwischen dem Befestigungsteil des Stellantriebs und dem Funktionsteil des Stellantriebs kann sichergestellt werden, dass das Ventil immer vollständig geöffnet werden kann.

Das Aufschieben des Stellantriebes in radialer Richtung auf den Adapter kann eine einfache Montage auch bei zum Beispiel Heizkreisverteilern mit geringem Ventilabstand ermöglichen.

Insgesamt kann erfindungsgemäß die Montage des Stellantriebs vereinfacht und eine Frist-Open-Funktionen sowie eine Möglichkeit der manuellen Öffnung des Ventils in sich vereint werden.

Ein Ausführungsbeispiel und weitere Vorteile der Erfindung werden nachstehend im Zusammenhang mit den folgenden Figuren rein schematisch dargestellt und näher erläutert. Darin zeigt:
- Fig. 1: eine schematische seitliche Darstellung eines erfindungsgemäßen Stellantriebs in Montagestellung und ein Ventil mit Adapter;
- Fig. 2: eine schematische seitliche Darstellung des erfindungsgemäßen Stellantriebs in Montagestellung zu Beginn einer translatorischen Montagebewegung auf den Adapter des Ventils;
- Fig. 3: eine schematische seitliche Darstellung des erfindungsgemäßen Stellantriebs in Montagestellung am Ende der translatorischen Montagebewegung auf dem Adapter des Ventils drauf;
- Fig. 4: die Darstellung der Fig. 3 ohne Gehäuse des erfindungsgemäßen Stellantriebs;
- Fig. 5: die Darstellung der Fig. 4 um 90° gedreht;
- Fig. 6: eine schematische seitliche Darstellung des erfindungsgemäßen Stellantriebs ohne Gehäuse in Betriebsstellung auf dem Adapter des Ventils drauf mit Verriegelungshebel in Lösestellung;
- Fig. 7: die Darstellung der Fig. 6 um 90° gedreht;
- Fig. 8: eine schematische seitliche Darstellung des erfindungsgemäßen Stellantriebs in Betriebsstellung auf dem Adapter des Ventils drauf mit Verriegelungshebel in Haltestellung; und
- Fig. 9: die Darstellung der Fig. 8 ohne Gehäuse des erfindungsgemäßen Stellantriebs.

Die o.g. Figuren werden in kartesischen Koordinaten betrachtet. Es erstreckt sich eine Längsrichtung X, welche auch als Tiefe X oder als Länge X bezeichnet werden kann. Senkrecht zur Längsrichtung X erstreckt sich eine Querrichtung Y, welche auch als Breite Y bezeichnet werden kann. Senkrecht sowohl zur Längsrichtung X als auch zur Querrichtung Y erstreckt sich eine vertikale Richtung Z, welche auch als Höhe Z bezeichnet werden kann. Die Längsrichtung X und die Querrichtung Y bilden gemeinsam die Horizontale X, Y, welche auch als horizontale Ebene X, Y bezeichnet werden kann.

Eine Warmwasserheizungsanlage (nicht dargestellt) weist eine Mehrzahl von Rohren (nicht dargestellt) auf, welche erwärmtes Heizungswasser eines Vorlaufs der Warmwasserheizungsanlage einer Mehrzahl von Heizkörpern bzw. Radiatoren (nicht dargestellt) und bzw. oder wenigstens einem Heizkreisverteiler (nicht dargestellt) zu führen können. Über die Heizkörper und bzw. oder über die Rohre, welche mittels des Heizkreisverteilers Heizungswasser zugeführt werden kann, können die Räume des Gebäudes (nicht dargestellt) beheizt werden. Um dabei die Menge des Heizungswassers zum Beispiel pro Raum mittels der Heizkörper bzw. mittels des Heizkreisverteilers regulieren zu können, weisen die Rohre des Vorlaufs der Warmwasserheizungsanlage im Anschlussbereich der Heizkörper bzw. des Heizkreisverteilers jeweils ein Ventil 1 auf, über welches die Menge des Heizwassers in den Heizkörper bzw. in die Rohre eines Raums reguliert werden kann. Das Ventil 1 kann daher auch als Stellventil 1 bezeichnet werden. Das Ventil 1 kann zwischen einer vollständig geschlossenen und einer vollständig geöffneten Stellung stufenlos eingestellt werden.

Das Einstellen des Ventils 1 kann mittels eines Stellantriebs 3 erfolgen, welcher auch als thermischer Stellantrieb 3 bezeichnet werden kann. Um die Stellantriebe 3 eines Herstellers mit verschiedenen Ventilen 1 unterschiedlicher Hersteller verbinden zu können, wird ein Adapter 2 vorgesehen, welcher dem Stellantrieb 3 zugewandt mit diesem und dem Ventil 1 zugewandt mit diesem verbunden werden kann. Hierzu kann die dem Stellantrieb zugewandte Seite des Adapters 2 stets gleich ausgebildet sein und es muss lediglich die dem Ventil 1 zugewandte Seite des Adapters 2 an das jeweilige Ventil 1 angepasst werden.

Mittels des Stellantriebs 3 kann das Ventil 1 hinsichtlich der Menge des durch das Ventil 1 strömenden Heizwassers reguliert werden. Hierzu kann von einem Thermostat (nicht dargestellt) die Temperatur zum Beispiel des entsprechenden Raumes des Gebäudes sensorisch erfasst, mit einer vorgegebenen Temperatur eines Benutzers verglichen und in Abhängigkeit dessen der Stellantrieb 3 angesteuert werden, die Stellung des Ventils 1 entsprechend zu regulieren, sodass durch die Menge des durch das Ventil 1 strömenden Heizwassers eine vorgegebene Temperatur im Raum erreicht werden kann.

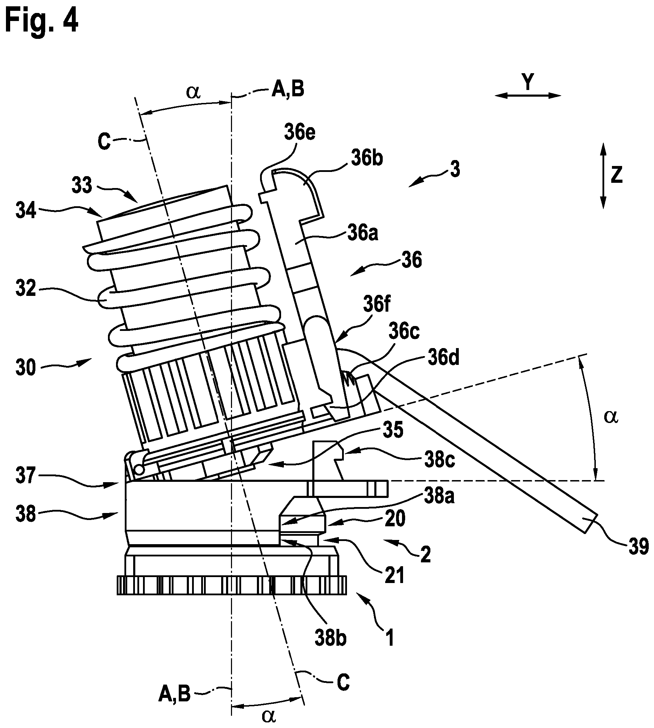

Der Stellantrieb 3 weist hierzu ein Stellelement 34 auf, welches auch als Stellglied 34 bezeichnet werden kann, siehe zum Beispiel Figur 4. Das Stellelement 34 kann mittels eines elektrisch beheizbaren Dehnkörpers bzw. mittels eines elektrisch beheizbaren Dehnstoffelements (nicht dargestellt) eine einstellbare Kraft entlang einer Längsachse C des Stellantriebs 3 gegen eine Druckfeder 32 des Stellantriebs 3 ausüben, um die Druckfeder 32 entgegen ihrer Wirkrichtung entlang der Längsachse C zusammenzudrücken. Eine entsprechende elektrische Beheizung des Dehnkörpers des Stellelements 34 kann von außerhalb des Stellantriebs 3 über einen elektrischen Anschluss 39 erfolgen. Die Druckfeder 32 drückte dabei ein Betätigungselement 35 entlang der Längsachse C aus dem Stellantrieb 3 zum Ventil 1 hin heraus. Das Betätigungselement 35 ist als Stift 35 bzw. als Kolben 35 ausgebildet.

Ist der Stellantrieb 3, wie nachfolgend näher erläutert werden wird, mittels des Adapters 2 auf dem Ventil 1 montiert, so drückt der Kolben 35 des Stellantriebs 3 entlang der Längsachse C des Stellantriebs 3 gegen eine vergleichsweise schwache Ventilfeder bzw. Rückstellfeder (nicht dargestellt) des Ventils 1. Die Ventilfeder des Ventils 1 drückt ihrerseits entlang einer Längsachse A des Ventils 1, welche im montierten Zustand mit der Längsachse C des Stellantriebs 3 zusammenfällt, d.h. deckungsgleich ist, in der entgegengesetzten Richtung auf einen Stößel (nicht dargestellt) des Ventils 1, um eine Durchströmöffnung des Ventils 1 fluidführend für das Heizwasser zu öffnen.

Wird der Dehnkörper des Stellelements 34 des Stellantriebs 3 nicht bestromt bzw. nicht beheizt, so wirkt der Druckfeder 32 des Stellantriebs 3 seitens des Stellelements 34 des Stellantriebs 3 keine Kraft entgegen. Die Federkraft der Druckfeder 32 des Stellantriebs 3 überwindet dann die Federkraft der Ventilfeder des Ventils 1, wodurch der Stößel des Ventils 1 dessen Durchströmöffnung schließt. Wird der Dehnkörper des Stellelements 34 des Stellantriebs 3 ausreichend bestromt bzw. beheizt, um mit seiner Antriebskraft der Federkraft der Druckfeder 32 des Stellantriebs 3 zumindest teilweise entgegenzuwirken, sodass die Kraft des Stellelements 34 des Stellantriebs 3 zusammen mit der Federkraft der Ventilfeder des Ventils 1 größer als die Federkraft der Druckfeder 32 des Stellantriebs 3 sind, so kann der Stößel des Ventils 1 dessen Durchströmöffnung zumindest teilweise öffnen und einen Durchfluss des Heizwassers durch das Ventil 1 hindurch ermöglichen. Wird die Bestromung des Dehnkörpers des Stellelements 34 des Stellantriebs 3 reduziert bzw. beendet, so zieht sich der Dehnkörper des Stellelements 34 des Stellantriebs 3 wieder von dem Stößel des Ventils 1 zurück. Der Stößel des Ventils 1 wird dann wieder zunehmend bis vollständig von der Federkraft der Druckfeder 32 des Stellantriebs 3 betätigt, so dass dessen Durchströmöffnung zunehmend bis vollständig geschlossen wird. Ein derartiger Stellantrieb 3 wird auch als NC-Stellantrieb 3 ("normally closed") bezeichnet.

Dieses Funktionsprinzip des thermischen Stellantriebs 3 ist dahingehend vorteilhaft, dass zum Schließen des Ventils 1 keine Betätigung bzw. Bestromung des Stellelements 34 des Stellantriebs 3 erforderlich ist. Davon ausgehend, dass in der meisten Zeit die Nutzung der Warmwasserheizungsanlage nicht erforderlich ist, kann somit das Betreiben des Stellantriebs 3 und der hierdurch verursachte Verbrauch elektrischer Energie möglichst gering gehalten werden.

Nachteilig ist jedoch bei diesem Funktionsprinzip des Stellantriebs 3, dass der Kolben 35 von der Druckfeder 32 grundsätzlich entlang der Längsachse C aus dem Stellantrieb 3 heraus gedrückt wird. Dies kann hinderlich sein, soll der Stellantrieb 3 auf dem Adapter 2 des Ventils 1 von einem Benutzer montiert werden, da bei der Montage die Federkraft der Druckfeder 32 des Stellantriebs 3 vom Benutzer überwunden werden muss, um den Stellantrieb 3 auf dem Adapter 2. Ventils 1 befestigen zu können. Auch kann ein Öffnen des Ventils 1 ohne die Verwendung des Stellantriebs 3, d. h. manuell durch den Benutzer, lediglich dadurch erfolgen, dass der Stellantrieb 3 wieder vollständig von dem Adapter 2 des Ventils 1 entfernt wird. Dies kann zu einem entsprechend hohen Aufwand der Demontage sowie der anschließenden erneuten Montage des Stellantriebs 3 führen.

Erfindungsgemäß besteht der Stellantrieb 3 daher im Wesentlichen aus einem Funktionsteil 30 und aus einem Befestigungsteil 38, welche mittels eines Schwenkelements 37 in Form eines Gelenks 37 gegenüber einander schwenkbar, kippbar bzw. drehbar verbunden sind.

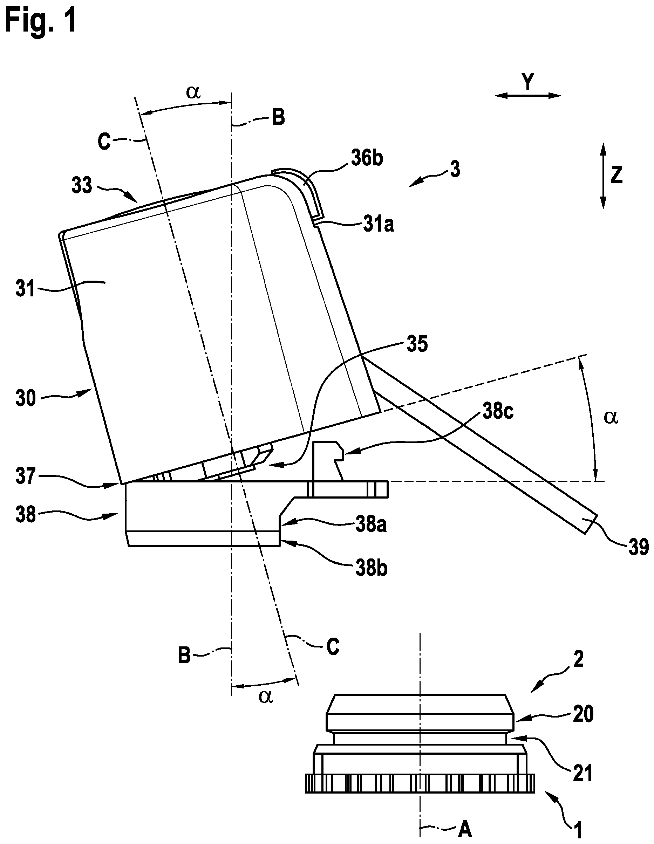

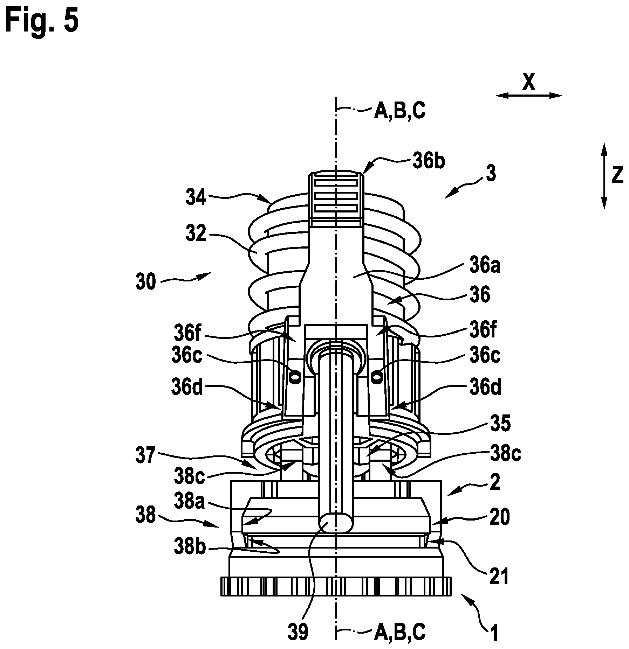

Das Befestigungsteil 38 des Stellantriebs 3 ist dazu ausgebildet, feststehend aber lösbar an dem Adapter 2 des Ventils 1 angeordnet und gehalten zu werden. Hierzu weist das im Wesentlichen zylindrisch und rotationssymmetrisch hinsichtlich seiner Längsachse B ausgebildete Befestigungsteil 38 senkrecht zu seiner Längsachse B und zum Beispiel in der Darstellung der Figur 1 entlang der Querrichtung Y seitlich eine Aufnahme 38a auf, welche mittels einander in der Längsrichtung X gegenüberliegenden Vorsprüngen 38b U-förmig ausgebildet ist, siehe zum Beispiel Figur 5. Die Aufnahme 38a des Befestigungsteils 38 ist in der Darstellung zum Beispiel der Figur 1 in der Querrichtung Y nach rechts hin offen und nach links hin halbbogenförmig geschlossen ausgebildet. Entsprechend verlaufen die Aufnahme 38a und die Vorsprünge 38b des Befestigungsteils 38 in der Darstellung der Figur 1 in der Querrichtung Y nach rechts hin halbrund bogenförmig geschlossen.

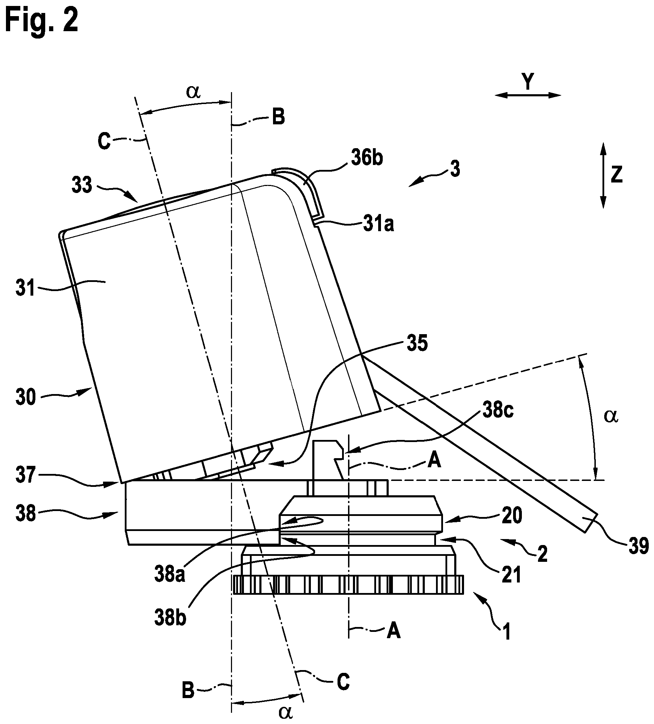

Der im Wesentlichen zylindrisch und rotationssymmetrisch hinsichtlich der Längsachse A des Ventils 1 bzw. des Adapters 2 ausgebildete Adapter 2 weist hierzu korrespondierend einen ringförmigen Vorsprung 20 auf, welcher entlang der Längsachse A des Ventils 1 bzw. des Adapters 2 zum Ventil 1 hin durch einen ringförmigen Rücksprung 21 beabstandet ist. Entsprechend kann, wie weiter unten noch näher erläutert werden wird, der Stellantrieb 3 mit seinem Befestigungsteil 38 bzw. dessen Aufnahme 38a zum Beispiel in der Darstellung der Figuren 1 bis 3 in der Querrichtung Y als translatorische Richtung von links nach rechts vom Benutzer mit einer translatorischen Bewegung auf den Adapter 2 aufgeschoben werden und dabei mit seinen Vorsprüngen 38b in den Rücksprung 21 des Adapters 2 eingreifen und hierdurch dessen Vorsprung 20 entlang der Längsachse A des Ventils 1 bzw. des Adapters 2 hintergreifen. Hierdurch kann das Befestigungsteil 38 des Stellantriebs 3 an dem Adapter 2 entlang der Längsachse A des Ventils 1 bzw. des Adapters 2, beidseitig in der Längsrichtung X sowie einseitig in der Querrichtung Y formschlüssig gehalten werden. Wird dabei die Aufnahme 38a des Befestigungsteils 38 entlang der Längsachse B des Befestigungsteils 38 sich zunehmend verjüngend vom offenen Ende weg ausgebildet, so kann zusätzlich zumindest ein gewisser kraftschlüssiger Halt zwischen dem Befestigungsteil 38 und dem Adapter 2 erreicht werden.

Das Funktionsteil 30 des Stellantriebs 3 weist die zuvor bereits beschriebene Druckfeder 32, das Stellelement 34 sowie den Kolben 35 auf, welche entlang der Längsachse C des Funktionsteils 30 angeordnet sind. Die Druckfeder 32 umgibt ringförmig das Stellelement 34, welches zylindrisch entlang der Längsachse C ausgebildet ist. Insgesamt ist das Funktionsteil 30 im Wesentlichen zylindrisch und rotationssymmetrisch hinsichtlich seiner Längsachse C ausgebildet. Der Kolben 35 ragt dabei entlang der Längsachse C dem Befestigungsteil 38 entgegen. Entlang der Längsachse C in der gegenüberliegenden Richtung ragt die Oberseite des Stellelements 34 im betätigten Zustand durch eine entsprechende Durchgangsöffnung (nicht dargestellt) des Gehäuses 31 über das Gehäuse 31 nach außen hervor (nicht dargestellt), so dass von außen der betätigte Zustand des Stellantriebs 3 von Benutzer optisch direkt und einfach erkannt werden kann. Die Oberseite des Stellelements 34 kann daher als Hubanzeige 33 bezeichnet werden.

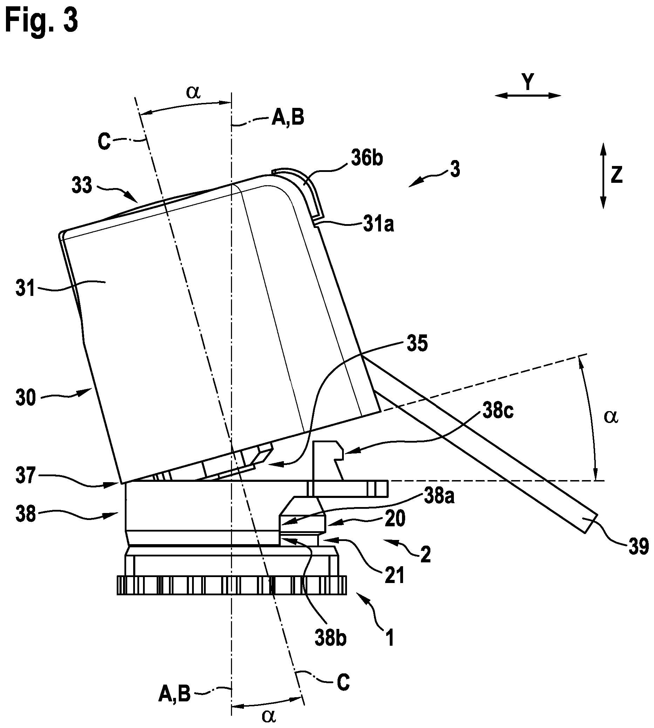

Bei der zuvor beschriebenen Montage des Befestigungsteils 38 des Stellantriebs 3 an dem Adapter 2 des Ventils 1, vergleiche zum Beispiel Figuren 1 bis 3, ist dabei das Funktionsteil 30 des Stellantriebs 3 um einen Schwenkwinkel α gegenüber dem Befestigungsteil 38 des Stellantriebs 3 als Montagestellung geschwenkt, gekippt, geneigt bzw. gedreht. Entsprechend weisen die Längsachse B des Befestigungsteils 38 des Stellantriebs 3 und die Längsachse C des Funktionsteils 30 des Stellantriebs 3 denselben Schwenkwinkel α zwischen sich auf. Fallen im montierten bzw. aufgeschobenen Zustand des Befestigungsteils 38 des Stellantriebs 3 auf dem Adapter 2 des Ventils 1, siehe zum Beispiel Figur 3, die Längsachse B des Befestigungsteils 38 des Stellantriebs 3 und die Längsachse A des Ventils 1 bzw. des Adapters 2 deckungsgleich zusammen, so weisen auch die Längsachse A des Ventils 1 bzw. des Adapters 2 und die Längsachse C des Funktionsteils 30 des Stellantriebs 3 den Schwenkwinkel α zwischen sich auf. Dabei wird der Schwenkwinkel α vom Benutzer in der Montagestellung des Befestigungsteils 38 und des Funktionsteils 30 des Stellantriebs 3 zueinander, wie zuvor hinsichtlich der Figuren 1 bis 3 beschrieben, derart gewählt und einstellt, dass die translatorische Bewegung des Befestigungsteils 38 des Stellantriebs 3 in der Querrichtung Y nicht durch den Kolben 35 des Funktionsteils 30 des Stellantriebs 3 behindert werden kann.

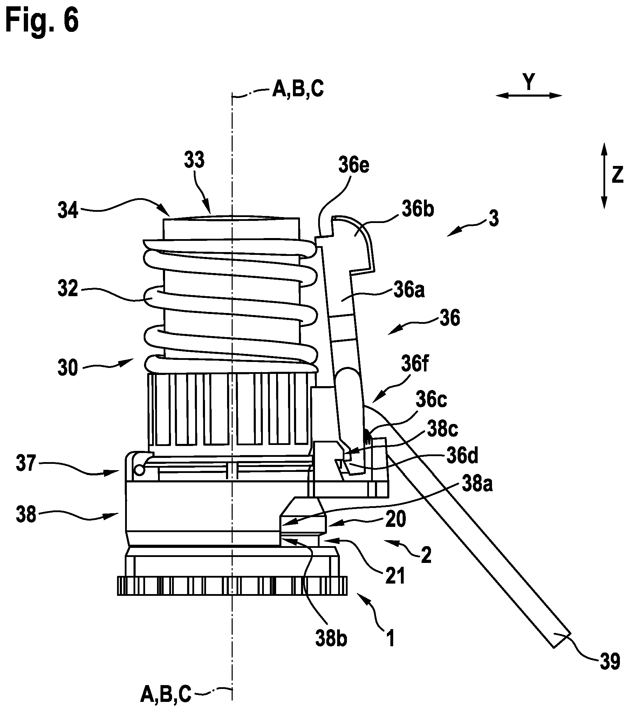

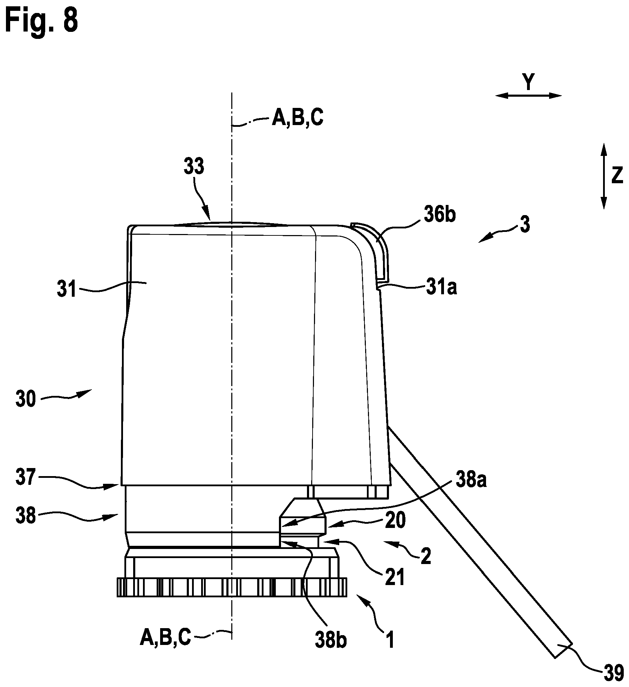

Ist das Befestigungsteil 38 des Stellantriebs 3 an dem Adapter 2 des Ventils 1 angeordnet, siehe zum Beispiel Figur 3, so kann der Benutzer das Funktionsteil 30 des Stellantriebs 3 mittels des Schwenkelements 37 zu dem Befestigungsteil 38 hin schwenken und hierdurch aus der Montagestellung in eine Betriebsstellung bringen, siehe zum Beispiel Figuren 6 bis 9. Hierdurch wird der Kolben 35 des Funktionsteils 30 des Stellantriebs 3, dessen Längsachse C in der Betriebsstellung sowohl mit der Längsachse B des Befestigungsteils 38 des Stellantriebs 3 als auch mit der Längsachse A des Ventils 1 bzw. des Adapters 2 deckungsgleich zusammenfällt, in Kontakt mit dem Stößel des Ventils 1 gebracht, sodass der Stellantrieb 3 bestimmungsgemäß mit dem Ventil 1 zusammenwirken kann. Gleichzeitig wird ein Haken (nicht dargestellt), welcher am Funktionsteil 30 des Stellantriebs 3 nahe dem Schwenkelement 37 angeordnet ist und vom Funktionsteil 30 des Stellantriebs 3 zum Befestigungsteil 38 des Stellantriebs 3 hin hervorragt, in der Betriebsstellung in Eingriff mit dem Adapter 2 gebracht, so dass der Haken auf der Innenseite hinter den Rand des Adapters 2 greift und hierdurch ein Entfernen des Stellantriebs 3 vom Adapter 2 in der Betriebsstellung verhindert werden kann.

Um das Funktionsteil 30 des Stellantriebs 3 in der Betriebsstellung feststehend aber lösbar an dem Befestigungsteil 38 des Stellantriebs 3 und damit auch an dem Adapter 2 des Ventils 1 zu halten und insbesondere der Federkraft der Druckfeder 32 des Funktionsteils 30 des Stellantriebs 3 entgegenzuwirken, kann das Funktionsteil 30 des Stellantriebs 3 mittels einer lösbaren Verrastung formschlüssig an dem Befestigungsteil 38 des Stellantriebs 3 gehalten werden. Hierzu weist das Funktionsteil 30 des Stellantriebs 3 ein Verriegelungselement 36 auf, siehe zum Beispiel Figuren 4 bis 7 und 9. Das Verriegelungselement 36 des Funktionsteils 30 des Stellantriebs 3 weist einen Verriegelungshebel 36a auf, welcher an dem Funktionsteil 30 schwenkbar gelagert ist. Die Schwenkachse des Verriegelungshebels 36a des Verriegelungselements 36 verläuft dabei entlang der Längsrichtung X.

Der Verriegelungshebel 36a weist an seinem oberen Ende ein Bedienelement 36b in Form eines Entriegelungsknopfes 36b auf, welcher im Wesentlichen seitlich durch eine Gehäuseaussparung 31a eines Gehäuses 31 des Funktionsteil 30 des Stellantriebs 3 für einen Benutzer erreichbar nach außen hervorragt. Das Gehäuse 31 ist feststehend an dem Funktionsteil 30 des Stellantriebs 3 angeordnet und umgibt in der Umfangsrichtung sowie entlang der Längsachse C nach oben hin die Komponenten des Funktionsteils 30. Der elektrische Anschluss 39 des Stellantriebs 3 ragt entlang der Längsachse C bzw. in der Höhe Z unterhalb des Bedienelements 36b durch das Gehäuse 31 nach außen hervor.

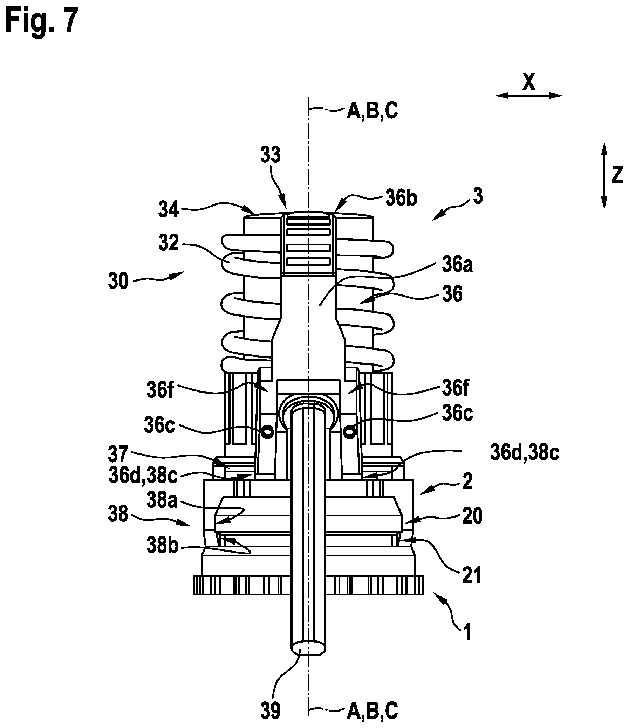

Etwa mittig entlang seiner länglichen Erstreckung ist die Schwenkachse (nicht dargestellt) des Verriegelungshebels 36a des Verriegelungselements 36 angeordnet. Unterhalb der Schwenkachse des Verriegelungshebels 36a teilt sich der Verriegelungshebel 36a gabelförmig auf und umgibt den elektrischen Anschluss 39 in der Längsrichtung X beidseitig in Form von zwei gabelförmigen Schenkeln 36f. Im unteren Bereich der beiden gabelförmigen Schenkel 36f des Verriegelungshebels 36a ist jeweils eine Verriegelungsfeder 36c angeordnet, siehe zum Beispiel Figuren 5 und 7, welche den unteren Abschnitt der beiden gabelförmigen Schenkel 36f des Verriegelungshebels 36a zur Längsachse C des Funktionsteils 30 des Stellantriebs 3 hin und entsprechend den oberen Teil des Verriegelungshebels 36a mit dem Bedienelement 36b von der Längsachse C des Funktionsteils 30 des Stellantriebs 3 weg drücken kann.

Dabei kann der obere Abschnitt des Verriegelungshebels 36a zwischen dessen Schwenkachse und dem Bedienelement 36b von innen an dem Gehäuse 31 des Funktionsteils 30 des Stellantriebs 3 derart anliegen, dass der Verriegelungshebel 36a parallel zur Längsachse C des Funktionsteils 30 des Stellantriebs 3 ausgerichtet wird. Wird der Verriegelungshebel 36a vom Benutzer durch Drücken des Bedienelements 36b zur Längsachse C des Funktionsteils 30 des Stellantriebs 3 mit seinem Bedienelement 36b in das Gehäuse 31 des Funktionsteils 30 des Stellantriebs 3 hineingedrückt, so wird hierdurch der untere Abschnitt der beiden gabelförmigen Schenkel 36f des Verriegelungshebels 36a entgegen der Federkraft der Verriegelungsfeder 36c von der Längsachse C des Funktionsteils 30 des Stellantriebs 3 weggedrückt. Hierbei wird die Bewegung des oberen Abschnitts des Verriegelungshebels 36a mit dem Bedienelement 36b zur Längsachse C des Funktionsteils 30 des Stellantriebs 3 hin durch ein Begrenzungselement 36e begrenzt, welches gegen die Druckfeder 32 des Funktionsteils 30 des Stellantriebs 3 anliegen kann.

Die unteren Enden der beiden gabelförmigen Schenkel 36f des Verriegelungselement 36a weisen dabei zur Längsachse C des Funktionsteils 30 des Stellantriebs 3 hinzeigend jeweils ein Rastelement 36d in Form eines Rasthakens 36d auf. An dem Befestigungsteil 38 des Stellantriebs 3 sind in der Querrichtung Y nach rechts zeigend feststehend zwei korrespondierende Rastelemente 38c in Form von Rasthaken 38c ausgebildet. Die Rasthakens 36d des Verriegelungselement 36 des Funktionsteils 30 des Stellantriebs 3 und die Rasthaken 38c des Befestigungsteils 38 des Stellantriebs 3 weisen dabei einander zugewandt Schrägflächen auf, mittels welcher die Rasthaken 36d, 38c in berührenden Kontakt kommen und die Rasthaken 38c des Befestigungsteils 38 des Stellantriebs 3 die Rasthaken 36d des Verriegelungselement 36 des Funktionsteils 30 des Stellantriebs 3 gegen die Federkraft der Verriegelungsfeder 36c des Verriegelungselements 36 des Funktionsteils 30 des Stellantriebs 3 von der Längsachse C des Funktionsteils 30 des Stellantriebs 3 weg drücken können.

Wird somit das Funktionsteil 30 des Stellantriebs 3 von dem Benutzer durch Schwenken aus der Montagestellung, siehe Figuren 1 bis 5, in die Betriebsstellung, siehe Figuren 6 bis 9, gebracht und hierzu entgegen der Federkraft der Druckfeder 32 des Funktionsteils 30 des Stellantriebs 3 zu dem Adapter 2 des Ventils 1 hingedrückt, bis die Längsachse A, B, C des Ventils 1 bzw. des Adapters 2, des Befestigungsteils 38 des Stellantriebs 3 und des Funktionsteils 30 des Stellantriebs 3 deckungsgleich aufeinanderliegen, so werden hierdurch im Laufe der Schwenkbewegung die Rasthaken 38c des Befestigungsteils 38 des Stellantriebs 3 mit den Rasthaken 36d des Verriegelungselements 36 des Funktionsteils 30 des Stellantriebs 3 in einander berührenden Kontakt gebracht. Bei Fortsetzen der Schwenkbewegung des Funktionsteils 30 des Stellantriebs 3 zum Befestigungsteil 38 des Stellantriebs 3 hin wird der Verriegelungshebel 36a des Verriegelungselements 36 des Funktionsteils 30 des Stellantriebs 3 aus seiner Haltestellung, welche in der Montagestellung des Funktionsteils 30 ohne haltende Funktion eingenommen werden kann, siehe zum Beispiel Figur 4, in eine geschwenkte Stellung gebracht, siehe Figur 6, welche einer Lösestellung des Verriegelungselements 36 des Funktionsteils 30 des Stellantriebs 3 entspricht.

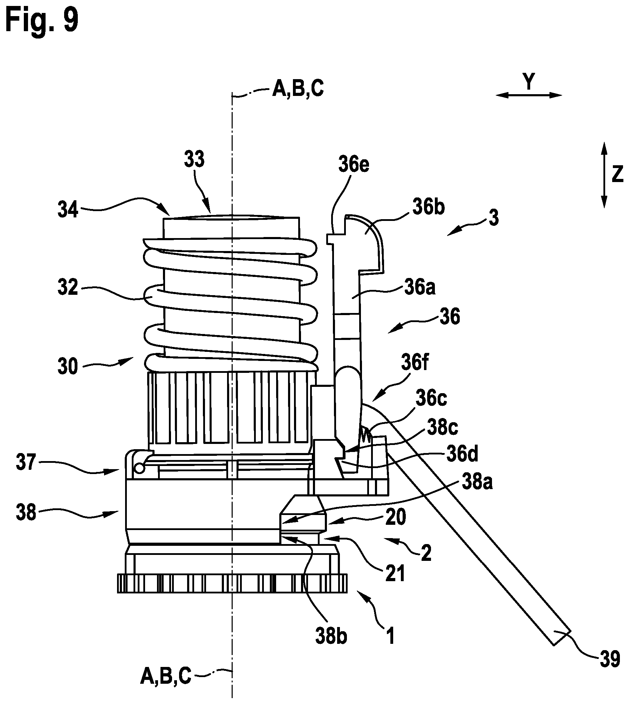

Wird die Schwenkbewegung des Funktionsteils 30 des Stellantriebs 3 gegenüber dessen Befestigungsteil 38 vom Benutzer in die Betriebsstellung fortgesetzt und das Funktionsteil 30 des Stellantriebs 3 auf das Befestigungsteil 38 des Stellantriebs 3 aufgedrückt, so greift in der Betriebsstellung der Kolben 35 des Funktionsteils 30 des Stellantriebs 3 in das Befestigungsteil 38 des Stellantriebs 3 wie zuvor beschrieben ein. Gleichzeitig passieren die Rasthaken 36d des Verriegelungselements 36 des Funktionsteils 30 des Stellantriebs 3 die feststehenden Rasthaken 38c des Befestigungsteils 38 des Stellantriebs 3. Dabei werden die die Rasthaken 36d des Verriegelungselements 36 des Funktionsteils 30 des Stellantriebs 3 von der Verriegelungsfeder 36c des Verriegelungselement 36 des Funktionsteils 30 des Stellantriebs 3 hinter die feststehenden Rasthaken 38c des Befestigungsteils 38 des Stellantriebs 3 gedrückt. Hierdurch wird das Verriegelungselement 36 des Funktionsteils 30 des Stellantriebs 3 aus der Lösestellung in die Haltestellung geschwenkt, sodass die Rasthaken 36d, 38c einander hintergreifen und die Haltestellung mit haltender Funktion eingenommen wird, siehe Figur 9. In dieser Betriebsstellung des Funktionsteils 30 des Stellantriebs 3 gegenüber dem Befestigungsteil 38 des Stellantriebs 3 und in der Haltestellung des Verriegelungselement 36 des Funktionsteils 30 des Stellantriebs 3 gegenüber dem Befestigungsteil 38 des Stellantriebs 3 kann nun ein bestimmungsgemäßer Gebrauch des erfindungsgemäßen Stellantriebs 3 erfolgen, wie zuvor beschrieben.

Soll zum Beispiel für einen Funktionstest, für eine Inspektion bzw. für eine Wartung die Druckfeder 32 des Funktionsteils 30 des Stellantriebs 3 von dem Adapter 2 des Ventils 1 entfernt werden, so kann dies erfindungsgemäß vergleichsweise einfach dadurch erfolgen, dass von dem Benutzer der Verriegelungshebel 36a des Verriegelungselement 36 des Funktionsteils 30 des Stellantriebs 3 durch Eindrücken des Bedienelements 36b zur Längsachse C des Funktionsteils 30 des Stellantriebs 3 hin aus der Haltestellung in die Lösestellung gebracht wird, siehe Figur 6. Hierdurch werden die Rasthaken 36d, 36c voneinander gelöst, sodass eine Schwenkbewegung des Funktionsteils 30 des Stellantriebs 3 um das Schwenkelement 37 des Stellantriebs 3 freigegeben wird. Die Schwenkbewegung des Funktionsteils 30 des Stellantriebs 3 wird dabei durch die Federkraft der Druckfeder 32 des Funktionsteils 30 des Stellantriebs 3 ausgeführt, sodass der Kolben 35 des Funktionsteils 30 des Stellantriebs 3 nicht mehr auf das Ventil 1 wirken kann. Hierdurch kann die Durchlassöffnung des Ventils 1 durch dessen Ventilfeder selbstständig geöffnet werden. Gleichzeitig wird der Stellantrieb 3 durch das Befestigungsteil 38 des Stellantriebs 3 wie zuvor beschrieben in der Montagestellung weiterhin an dem Adapter 2 des Ventils 1 gehalten.

Durch Schwenken bzw. durch Drücken des Funktionsteils 30 des Stellantriebs 3 durch den Benutzer aus der Montagestellung zu dem Befestigungsteil 38 des Stellantriebs 3 hin in die Betriebsstellung kann die Betriebsstellung wie zuvor beschrieben erneut eingenommen werden.

### BEZUGSZEICHENLISTE (Teil der Beschreibung)

- α: Schwenkwinkel des Schwenkelements 37 bzw. zwischen den Längsachsen B, C
- A: Längsachse des Ventils 1 bzw. des Adapters 2
- B: Längsachse des Befestigungsteils 38 des Stellantriebs 3
- C: Längsachse des Funktionsteils 30 des Stellantriebs 3
- X: Längsrichtung; Tiefe; Länge
- Y: Querrichtung; Breite
- Z: vertikale Richtung; Höhe
- X, Y: Horizontale; horizontale Ebene

- 1: Ventil; Stellventil
- 2: Adapter
- 20: Vorsprung
- 21: Rücksprung
- 3: (thermischer) Stellantrieb
- 30: Funktionsteil
- 31: Gehäuse
- 31a: Gehäuseaussparung
- 32: Druckfeder
- 33: Hubanzeige
- 34: Stellelement; Stellglied
- 35: Betätigungselement; Stift; Kolben
- 36: Verriegelungselement
- 36a: Verriegelungshebel des Verriegelungselements 36
- 36b: Bedienelement bzw. Entriegelungsknopf des Verriegelungselements 36
- 36c: Verriegelungsfeder des Verriegelungselements 36
- 36d: Rastelemente bzw. Rasthaken des Verriegelungselements 36
- 36e: Begrenzungselement des Verriegelungselements 36
- 36f: gabelförmige Schenkel des Verriegelungselements 36
- 37: Schwenkelement; Gelenk
- 38: Befestigungsteil
- 38a: Aufnahme des Befestigungsteils 38
- 38b: Vorsprung des Befestigungsteils 38
- 38c: Rastelemente bzw. Rasthaken des Befestigungsteils 38
- 39: elektrischer Anschluss

## Patentansprüche

1. Elektrischer oder pneumatischer Stellantrieb (3),
welcher ausgebildet ist, vorzugsweise mittels eines Adapters (2), mit einem Ventil (1) verbunden zu werden,
mit einem Stellelement (34), welches ausgebildet ist, das Ventil (1) zu betätigen,
**dadurch gekennzeichnet, dass**
der Stellantrieb (3)
ein Funktionsteil (30) aufweist, welches das Stellelement aufweist, und
ein Befestigungsteil (38) aufweist, welches zum Verbinden mit dem Ventil (1) ausgebildet ist,
wobei das Funktionsteil (30) und das Befestigungsteil (38) mittels eines Schwenkelements (37) schwenkbar miteinander verbunden sind.

2. Stellantrieb (3) nach Anspruch 1, **dadurch gekennzeichnet, dass**
das Funktionsteil (30) und das Befestigungsteil (38) ausgebildet sind,
in einer Montagestellung um einen Schwenkwinkel (α) voneinander weg geschwenkt und
in einer Betriebsstellung miteinander fluchtend angeordnet zu sein,
wobei der Schwenkwinkel (α) derart groß ist, so dass das Stellelement (34) das Ventil (1) nicht betätigen kann.

3. Stellantrieb (3) nach Anspruch 2, **dadurch gekennzeichnet, dass**
das Funktionsteil (30) eine Längsachse (C) aufweist und
das Befestigungsteil (38) eine Längsachse (B) aufweist,
wobei in der Montagestellung die Längsachse (C) des Funktionsteils (30) und die Längsachse (B) des Befestigungsteils (38) um den Schwenkwinkel (α) gedreht zueinander verlaufen und
wobei in der Betriebsstellung die Längsachse (C) des Funktionsteils (30) und die Längsachse (B) des Befestigungsteils (38) parallel oder deckungsgleich verlaufen.

4. Stellantrieb (3) nach Anspruch 3, **dadurch gekennzeichnet, dass**
das Stellelement (34) ausgebildet ist, das Ventil (1) entlang dessen Längsachse (A) zu betätigen,
wobei in der Montagestellung die Längsachse (C) des Funktionsteils (30) um den Schwenkwinkel (α) geschwenkt zur Längsachse (A) des Ventils (1) verläuft und
wobei in der Betriebsstellung die Längsachse (C) des Funktionsteils (30) parallel zur oder deckungsgleich mit der Längsachse (A) des Ventils (1) verläuft.

5. Stellantrieb (3) nach einem der Ansprüche 2 bis 4, **dadurch gekennzeichnet, dass**
das Funktionsteil (30) und das Befestigungsteil (38) ausgebildet sind, einander in der Betriebsstellung lösbar zu halten.

6. Stellantrieb (3) nach Anspruch 5, **dadurch gekennzeichnet, dass**
das Funktionsteil (30) ein Verriegelungselement (36) aufweist, welches ausgebildet ist,
in der Montagestellung von dem Befestigungsteil (38) gelöst zu sein und
in der Betriebsstellung mit dem Befestigungsteil (38) lösbar verbunden zu sein.

7. Stellantrieb (3) nach Anspruch 6, **dadurch gekennzeichnet, dass**
das Verriegelungselement (36) einen Verriegelungshebel (36a) aufweist, welcher schwenkbar an dem Funktionsteil (30) angeordnet ist,
wobei der Verriegelungshebel (36a) ausgebildet ist, von der Federkraft einer Verriegelungsfeder (36c) in eine Haltestellung gedrückt zu werden und das Befestigungsteil (38) lösbar zu halten,
wobei der Verriegelungshebel (36a) ferner ausgebildet ist, entgegen der Federkraft der Verriegelungsfeder (36c) von einem Benutzer in eine Lösestellung gedrückt zu werden und das Befestigungsteil (38) freizugeben.

8. Stellantrieb (3) nach Anspruch 7, **dadurch gekennzeichnet, dass**
das Verriegelungselement (36), vorzugsweise der Verriegelungshebel (36a), wenigstens ein Rastelement (36d), vorzugsweise wenigstens einen Rasthaken (36d), und das Befestigungsteil (38) wenigstens ein Rastelement (38c), vorzugsweise wenigstens einen Rasthaken (38c), aufweisen, welche ausgebildet sind, einander in der Haltestellung formschlüssig zu halten und einander in der Lösestellung freizugeben.

9. Stellantrieb (3) nach Anspruch 7 oder 8, **dadurch gekennzeichnet, dass**
der Verriegelungshebel (36a) wenigstens ein Begrenzungselement (36e) aufweist, welches ausgebildet ist, die Schwenkbewegung des Verriegelungshebels (36a) aus der Haltestellung in die Lösestellung zu begrenzen.

10. Stellantrieb (3) nach einem der Ansprüche 7 bis 9, **dadurch gekennzeichnet, dass**
das Funktionsteil (30) ein Gehäuse (31) aufweist, welches wenigstens den Verriegelungshebel (36a) zumindest abschnittsweise umschließt,
wobei das Gehäuse (31) eine Gehäuseaussparung (31a) aufweist, durch welche hindurch der Verriegelungshebel (36a) für einen Benutzer betätigbar ist,
wobei vorzugsweise der Verriegelungshebel (36a) ein Bedienelement (36b) aufweist, welches zumindest abschnittsweise durch die Gehäuseaussparung (31a) hindurch nach außerhalb des Gehäuses (36) ragt.

11. Stellantrieb (3) nach einem der vorangehenden Ansprüche, **dadurch gekennzeichnet, dass**
das Stellelement (34) ausgebildet ist, das Ventil (1) entlang dessen Längsachse (A) zu betätigen,
wobei das Befestigungsteil (38) ausgebildet ist, zumindest im Wesentlichen senkrecht zur Längsachse (A) des Ventils (1), vorzugsweise und senkrecht zur Schwenkachse des Schwenkelements (37), mittels einer Bewegung in einer translatorischen Richtung mit dem Ventil (1) oder mit einem Adapter (2) des Ventils (1) verbunden zu werden.

12. Stellantrieb (3) nach Anspruch 11, **dadurch gekennzeichnet, dass**
das Befestigungsteil (38) eine in der translatorischen Richtung wenigstens einseitig, vorzugsweise genau einseitig, offene Aufnahme (38a) aufweist, welche ausgebildet ist, wenigstens einen Vorsprung (20) des Ventils (1) oder des Adapters (2) aufzunehmen,
wobei das Befestigungsteil (38) senkrecht zur translatorischen Richtung und senkrecht zur Längsachse (A) des Ventils (1) dem Ventil (1) zugewandt wenigstens einen Vorsprung (38b) aufweist, welcher ausgebildet ist, wenigstens einen entsprechenden Rücksprung (21) des Ventils (1) oder des Adapters (2) zu hintergreifen.

13. Stellantrieb (3) nach Anspruch 12, **dadurch gekennzeichnet, dass**
die Aufnahme (38a) sich im Verlauf der translatorischen Richtung entlang der Längsachse (A) des Ventils (1) verjüngend ausgebildet ist, so dass gegenüber dem Vorsprung (20) des Ventils (1) oder des Adapters (2) ein kraftschlüssiger Halt bewirkt werden kann.

14. Stellantrieb (3) nach einem der Ansprüche 11 bis 13, **dadurch gekennzeichnet, dass**
das Funktionsteil (30) ein Betätigungselement (35), vorzugsweise einen Kolben (35), zum Betätigen einer Ventilfeder des Ventils (1), vorzugsweise entlang dessen Längsachse (A), aufweist.

15. Stellantrieb (3) nach einem der vorangehenden Ansprüche, **dadurch gekennzeichnet, dass**
das Funktionsteil (30) eine Druckfeder (32) aufweist, welche ausgebildet ist, mittels eines Betätigungselements (35), vorzugsweise mittels eines Kolbens (35), einer Ventilfeder des Ventils (1) entgegenzuwirken,
wobei die Federkraft der Druckfeder (32) größer als die Federkraft der Ventilfeder des Ventils (1) ist,
wobei das Stellelement (34) ausgebildet ist, bei Betätigung, insbesondere bei Bestromung, der Druckfeder (32) entgegenzuwirken und die Federkraft der Druckfeder (32) gemeinsam mit der Federkraft der Ventilfeder des Ventils (1) zu überwinden.

## Claims

1. Electric or pneumatic actuator (3), which is designed to be connected, preferably by means of an adapter (2), to a valve (1),
the actuator comprising an actuating element (34) which is designed to activate the valve (1),
**characterized in that**
the actuator (3) comprises a functional part (30) having the actuating element, and
a fastening part (38) which is designed to connect to the valve (1),
the functional part (30) and the fastening part (38) being pivotably connected to one another by means of a pivoting element (37).

2. Actuator (3) according to claim 1, **characterized in that**
the functional part (30) and the fastening part (38) are designed
to be pivoted away from one another in an assembly position by a pivot angle (α) and
to be arranged in an operational position in alignment with one another,
the pivot angle (α) being so large that the actuating element (34) cannot activate the valve (1).

3. Actuator (3) according to claim 2, **characterized in that**
the functional part (30) has a longitudinal axis (C) and
the fastening part (38) has a longitudinal axis (B),
the longitudinal axis (C) of the functional part (30) and the longitudinal axis (B) of the fastening part (38) running rotated relative to one another by the pivot angle (α) in the assembly position, and the longitudinal axis (C) of the functional part (30) and the longitudinal axis (B) of the fastening part (38) running in parallel or congruently in the operational position.

4. Actuator (3) according to claim 3, **characterized in that**
the actuating element (34) is designed to activate the valve (1) along the longitudinal axis (A) thereof,
the longitudinal axis (C) of the functional part (30) running pivoted to the longitudinal axis (A) of the valve (1) by the pivot angle (α) in the assembly position and
the longitudinal axis (C) of the functional part (30) running in parallel to or congruently with the longitudinal axis (A) of the valve (1) in the operational position.

5. Actuator (3) according to any of claims 2 to 4, **characterized in that**
the functional part (30) and the fastening part (38) are designed to detachably hold one another in the operational position.

6. Actuator (3) according to claim 5, **characterized in that**
the functional part (30) comprises a locking element (36) which is designed
to be detached from the fastening part (38) in the assembly position and
to be detachably connected to the fastening part (38) in the operational position.

7. Actuator (3) according to claim 6, **characterized in that**
the locking element (36) comprises a locking lever (36a) which is pivotably arranged on the functional part (30),
the locking lever (36a) being designed to be pressed into a holding position by the spring force of a locking spring (36c) and to hold the fastening part (38) detachably,
the locking lever (36a) being further designed to be pressed into a release position by a user against the spring force of the locking spring (36c) and to release the fastening part (38).

8. Actuator (3) according to Claim 7, **characterized in that**
the locking element (36), preferably the locking lever (36a), comprises at least one latching element (36d), preferably at least one latching hook (36d), and the fastening part (38) comprises at least one latching element (38c), preferably at least one latching hook (38c), which latching elements are designed to hold one another form-fittingly in the holding position and to release one another in the release position.

9. Actuator (3) according to claim 7 or claim 8, **characterized in that**
the locking lever (36a) comprises at least one limiting element (36e) which is designed to limit the pivoting movement of the locking lever (36a) from the holding position into the release position.

10. Actuator (3) according to any of claims 7 to 9, **characterized in that**
the functional part (30) comprises a housing (31) which at least partially encloses the locking lever (36a),
the housing (31) comprising a housing opening (31a) through which the locking lever (36a) can be activated by a user,
preferably the locking lever (36a) comprising an operating element (36b) which projects at least partially through the housing opening (31a) to the outside of the housing (36).

11. Actuator (3) according to any of the preceding claims, **characterized in that**
the actuating element (34) is designed to activate the valve (1) along the longitudinal axis (A) thereof,
the fastening part (38) being designed to be connected to the valve (1) or to an adapter (2) of the valve (1) at least substantially perpendicular to the longitudinal axis (A) of the valve (1), and preferably perpendicular to the pivot axis of the pivoting element (37), by means of a movement in a translational direction.

12. Actuator (3) according to claim 11, **characterized in that**
the fastening part (38) comprises a receptacle (38a) that is open at least on one side, preferably exactly on one side, in the translational direction and which is designed to receive at least one projection (20) of the valve (1) or of the adapter (2),
the fastening part (38) comprising, perpendicular to the translational direction and perpendicular to the longitudinal axis (A) of the valve (1) and facing the valve (1), at least one projection (38b), which is designed to engage behind at least one corresponding recess (21) of the valve (1) or of the adapter (2).

13. Actuator (3) according to claim 12, **characterized in that**
the receptacle (38a) is designed to taper over the course of the translational direction along the longitudinal axis (A) of the valve (1), so that a force-fitting hold can be achieved against the projection (20) of the valve (1) or of the adapter (2).

14. Actuator (3) according to any of claims 11 to 13, **characterized in that**
the functional part (30) comprises an activating element (35), preferably a piston (35), for activating a valve spring of the valve (1), preferably along the longitudinal axis (A) thereof.

15. Actuator (3) according to any of the preceding claims, **characterized in that**
the functional part (30) comprises a compression spring (32) which is designed to counteract a valve spring of the valve (1) by means of an activating element (35), preferably by means of a piston (35),
the spring force of the compression spring (32) being greater than the spring force of the valve spring of the valve (1),
the actuating element (34) being designed to counteract, when activated, in particular when energized, the compression spring (32), and to overcome the spring force of the compression spring (32) together with the spring force of the valve spring of the valve (1).

## Revendications

1. Mécanisme de réglage (3) électrique ou pneumatique réalisé pour être relié à une soupape (1), de préférence au moyen d'un adaptateur (2),
comportant un élément de réglage (34) réalisé pour actionner la soupape (1),
**caractérisé en ce que**
le mécanisme de réglage (3) présente une partie fonctionnelle (30) présentant l'élément de réglage, et
présente une partie de fixation (38) réalisée pour la liaison à la soupape (1),
dans lequel la partie fonctionnelle (30) et la partie de fixation (38) sont reliées entre elles de manière à pouvoir pivoter au moyen d'un élément pivotant (37).

2. Mécanisme de réglage (3) selon la revendication 1,
**caractérisé en ce que**
la partie fonctionnelle (30) et la partie de fixation (38) sont réalisées pour être écartées l'une de l'autre par pivotement selon un angle de pivotement (α) dans une position de montage, et
pour être disposées en affleurement l'une de l'autre dans une position de fonctionnement,
dans lequel l'angle de pivotement (α) est si grand que l'élément de réglage (34) ne peut pas actionner la soupape (1).

3. Mécanisme de réglage (3) selon la revendication 2,
**caractérisé en ce que**
la partie fonctionnelle (30) présente un axe longitudinal (C), et
la partie de fixation (38) présente un axe longitudinal (B),
dans lequel, dans la position de montage, l'axe longitudinal (C) de la partie fonctionnelle (30) et l'axe longitudinal (B) de la partie de fixation (38) s'étendent l'un par rapport à l'autre en tournant selon l'angle de pivotement (α), et
dans lequel, dans la position de fonctionnement, l'axe longitudinal (C) de la partie fonctionnelle (30) et l'axe longitudinal (B) de la partie de fixation (38) s'étendent de manière parallèle ou coïncidente.

4. Mécanisme de réglage (3) selon la revendication 3,
**caractérisé en ce que**
l'élément de réglage (34) est réalisé pour actionner la soupape (1) le long de son axe longitudinal (A),
dans lequel, dans la position de montage, l'axe longitudinal (C) de la partie fonctionnelle (30) s'étend par rapport à l'axe longitudinal (A) de la soupape (1) en étant pivoté selon l'angle de pivotement (α), et
dans lequel, dans la position de fonctionnement, l'axe longitudinal (C) de la partie fonctionnelle (30) s'étend parallèlement à l'axe longitudinal (A) de la soupape (1) ou coïncide avec celui-ci.

5. Mécanisme de réglage (3) selon l'une des revendications 2 à 4,
**caractérisé en ce que**
la partie fonctionnelle (30) et la partie de fixation (38) sont réalisées pour se maintenir l'une l'autre de manière détachable dans la position de fonctionnement.

6. Mécanisme de réglage (3) selon la revendication 5,
**caractérisé en ce que**
la partie fonctionnelle (30) présente un élément de verrouillage (36) réalisé pour être détaché de la partie de fixation (38) dans la position de montage et pour être relié de manière détachable à la partie de fixation (38) dans la position de fonctionnement.

7. Mécanisme de réglage (3) selon la revendication 6,
**caractérisé en ce que**
l'élément de verrouillage (36) présente un levier de verrouillage (36a) disposé de manière à pouvoir pivoter sur la partie fonctionnelle (30),
dans lequel le levier de verrouillage (36a) est réalisé pour être poussé dans une position de maintien par la force de ressort d'un ressort de verrouillage (36c) et pour maintenir de manière détachable la partie de fixation (38),
dans lequel le levier de verrouillage (36a) est en outre réalisé pour être poussé dans une position de détachement par un utilisateur à l'encontre de la force de ressort du ressort de verrouillage (36c) et pour libérer la partie de fixation (38).

8. Mécanisme de réglage (3) selon la revendication 7,
**caractérisé en ce que**
l'élément de verrouillage (36), de préférence le levier de verrouillage (36a), présente au moins un élément d'encliquetage (36d), de préférence au moins un crochet d'encliquetage (36d), et la partie de fixation (38) présente au moins un élément d'encliquetage (38c), de préférence au moins un crochet d'encliquetage (38c), réalisés pour se maintenir l'un l'autre par complémentarité de forme dans la position de maintien et pour se libérer l'un l'autre dans la position de détachement.

9. Mécanisme de réglage (3) selon la revendication 7 ou 8,
**caractérisé en ce que**
le levier de verrouillage (36a) présente au moins un élément de limitation (36e) réalisé pour limiter le mouvement de pivotement du levier de verrouillage (36a) de la position de maintien à la position de détachement.

10. Mécanisme de réglage (3) selon l'une des revendications 7 à 9,
**caractérisé en ce que**
la partie fonctionnelle (30) présente un boîtier (31) qui entoure, au moins dans certaines sections, au moins le levier de verrouillage (36a),
dans lequel le boîtier (31) présente un évidement de boîtier (31a) à travers lequel le levier de verrouillage (36a) peut être actionné par un utilisateur,
dans lequel de préférence le levier de verrouillage (36a) présente un élément de manipulation (36b) faisant saillie au moins dans certaines sections à travers l'évidement de boîtier (31a) et vers l'extérieur du boîtier (36).

11. Mécanisme de réglage (3) selon l'une des revendications précédentes,
**caractérisé en ce que**
l'élément de réglage (34) est réalisé pour actionner la soupape (1) le long de son axe longitudinal (A),
dans lequel la partie de fixation (38) est réalisée pour être reliée au moins sensiblement perpendiculairement à l'axe longitudinal (A) de la soupape (1), de préférence et perpendiculairement à l'axe de pivotement de l'élément pivotant (37), au moyen d'un mouvement dans une direction de translation, à la soupape (1) ou à un adaptateur (2) de la soupape (1).

12. Mécanisme de réglage (3) selon la revendication 11,
**caractérisé en ce que**
la partie de fixation (38) présente un logement (38a) ouvert au moins d'un côté, de préférence d'un seul côté, dans la direction de translation, lequel logement est réalisé pour recevoir au moins une saillie (20) de la soupape (1) ou de l'adaptateur (2),
dans lequel la partie de fixation (38) présente, perpendiculairement à la direction de translation et perpendiculairement à l'axe longitudinal (A) de la soupape (1), en étant tournée vers la soupape (1), au moins une saillie (38b) réalisée pour venir en prise derrière au moins un renfoncement (21) correspondant de la soupape (1) ou de l'adaptateur (2).

13. Mécanisme de réglage (3) selon la revendication 12,
**caractérisé en ce que**
le logement (38a) est réalisé en se rétrécissant sur le parcours de la direction de translation le long de l'axe longitudinal (A) de la soupape (1) de sorte qu'un maintien par adhérence peut être provoqué par rapport à la saillie (20) de la soupape (1) ou de l'adaptateur (2).

14. Mécanisme de réglage (3) selon l'une des revendications 11 à 13,
**caractérisé en ce que**
la partie fonctionnelle (30) présente un élément d'actionnement (35), de préférence un piston (35), pour l'actionnement d'un ressort de soupape de la soupape (1), de préférence le long de son axe longitudinal (A).

15. Mécanisme de réglage (3) selon l'une des revendications précédentes,
**caractérisé en ce que**
la partie fonctionnelle (30) présente un ressort de compression (32) réalisé pour contrer un ressort de soupape de la soupape (1) au moyen d'un élément d'actionnement (35), de préférence au moyen d'un piston (35),
dans lequel la force de ressort du ressort de compression (32) est supérieure à la force de ressort du ressort de soupape de la soupape (1),
dans lequel l'élément de réglage (34) es réalisé pour contrer le ressort de compression (32) lors de l'actionnement, en particulier lors de l'alimentation en courant, et pour surmonter la force de ressort du ressort de pression (32) conjointement avec la force de ressort du ressort de soupape de la soupape (1).
